# EUROPEAN PATENT APPLICATION

(11) **EP 4 310 663 A1**
(43) Date of publication of application: **24.01.2024**
(21) Application number: 22791031.2
(22) Date of filing: 19.04.2022
(51) Int. Cl.: G06F 3/14

(54) **METHOD FOR ADJUSTING SCREEN PROJECTION DISPLAY PARAMETERS**

(30) Priority: 22.04.2021 CN 202110437451
(71) Applicant: Huawei Technologies Co., Ltd., Longgang Shenzhen, Guangdong 518129 (CN)
(72) Inventor: XU, Hui, Shenzhen, Guangdong 518129 (CN); LI, Ziran, Shenzhen, Guangdong 518129 (CN)
(74) Representative: Goddar, Heinz J.
(86) International application number: PCT/CN2022/087679
(87) International publication number: WO 2022/222924

(57) **Abstract**

A method for adjusting a display parameter for projection is provided. The method includes: A large-screen device (200) establishes a first projection screen connection to an electronic device (100), and the electronic device (100) establishes a second projection screen connection to a display device (300). The large-screen device (200) obtains a target display parameter through negotiation based on a display parameter of the large-screen device (200), a display parameter of the electronic device (100), and a display parameter of the display device (300). The target display parameter includes a target encoding frame rate, so that the target encoding frame rate is less than a display frame rate or a decoding frame rate of the display device (300), or a display frame rate of the large-screen device (200) is greater than the target encoding frame rate. Then, the large-screen device (200) processes projection content based on the target display parameter, and sends the projection content to the display device (300). In this way, a problem that projection content displayed on a display screen is out of sync with audio when an external display screen is connected to a projection screen system is resolved, and user experience is improved.

## Description

This application claims priority to Chinese Patent Application No. 202110437451.1, filed with the China National Intellectual Property Administration on April 22, 2021 and entitled "METHOD FOR ADJUSTING DISPLAY PARAMETER FOR PROJECTION", which is incorporated herein by reference in its entirety.

### TECHNICAL FIELD

This application relates to the field of projection screen technologies, and in particular, to a method for adjusting a display parameter for projection.

### BACKGROUND

With development of network communications technologies, smart televisions featuring large screens and smartphones and tablet computers with high portability have been used for multi-screen collaboration to help improve user experience. For example, when a mobile phone and a personal computer (personal computer, PC) perform projection screen collaboration, the mobile phone and the PC negotiate a display frame rate, and then the mobile phone and the PC display projection content based on a negotiated display frame rate.

Then, when a display screen needs to be extended on a PC side, if an external display screen does not have an audio play module, the external display screen displays only an image transmitted on the PC side. When a display frame rate of the external display screen is lower than the negotiated display frame rate of the mobile phone and the PC, an image displayed on the external display screen is different from an image displayed on the PC side. As a result, projection content displayed on the external display screen is out of sync with audio.

### SUMMARY

This application provides a method for adjusting a display parameter for projection, so that a problem that projection content displayed on a display screen is out of sync with audio when an external display screen is connected to a projection screen system is resolved, and user experience is improved.

According to a first aspect, this application provides a projection screen system. The system includes an electronic device, a large-screen device, and a display device. The large-screen device is configured to: establish a first projection screen connection to the electronic device; and establish a second projection screen connection to the display device. The electronic device is configured to send a first display parameter to the large-screen device, where the first display parameter includes a first encoding frame rate of the electronic device. The display device is configured to send a second display parameter to the large-screen device, where the second display parameter includes a first decoding frame rate and a first display frame rate of the display device. The large-screen device is further configured to: receive the first display parameter sent by the electronic device; receive the second display parameter sent by the display device; obtain a display parameter 3 of the large-screen device, where the display parameter 3 includes a second encoding frame rate, a second decoding frame rate, and a second display frame rate; determine a target display parameter based on the first display parameter, the second display parameter, and the display parameter 3, where the target display parameter includes a target encoding frame rate, and the target encoding frame rate is less than or equal to a smallest value in the first encoding frame rate, the first decoding frame rate, the first display frame rate, the second encoding frame rate, the second decoding frame rate, and the second display frame rate; and encode first projection content based on the target encoding frame rate in the target display parameter, and project the first projection content to the display device.

By using the system according to the first aspect, when an external display screen is connected to the projection screen system, a new projection screen system negotiates display parameters of devices in the projection screen system, to avoid a problem that projection content displayed on the display screen is out of sync with audio when the external display screen is connected to the projection screen system, and improve user experience.

With reference to the system according to the first aspect, in a possible implementation, before the large-screen device encodes the first projection content based on the target encoding frame rate in the target display parameter, and projects the first projection content to the display device, the large-screen device is further configured to: send the target display parameter to the electronic device, where the target display parameter is used to indicate the electronic device to encode second projection content at the target encoding frame rate and send the second projection content to the large-screen device; the electronic device is further configured to: encode the second projection content at the target encoding frame rate, and send the second projection content to the large-screen device; and the large-screen device is further configured to: receive the second projection content sent by the electronic device, and display the second projection content.

With reference to the system according to the first aspect, in a possible implementation, the large-screen device is specifically configured to: after the large-screen device establishes the first projection screen connection to the electronic device, establish the second projection screen connection to the display device; or after the large-screen device establishes the second projection screen connection to the display device, establish the first projection screen connection to the electronic device.

With reference to the system according to the first aspect, in a possible implementation, before the large-screen device receives the first display parameter sent by the electronic device, the large-screen device is further configured to: send a first request to the electronic device, where the first request is used to indicate the electronic device to send the first display parameter to the large-screen device; the electronic device is further configured to: receive the first request sent by the large-screen device; and send the first display parameter to the large-screen device in response to the first request; and the large-screen device is further configured to: receive the first display parameter sent by the electronic device.

With reference to the system according to the first aspect, in a possible implementation, the large-screen device is specifically configured to: send the first request to the electronic device when it is determined that the second encoding frame rate is greater than the first decoding frame rate, the second encoding frame rate is greater than the first display frame rate, or the second encoding frame rate is less than the second display frame rate.

With reference to the system according to the first aspect, in a possible implementation, the first display parameter further includes a first encoding type and/or first screen resolution; the second display parameter further includes a second encoding type and/or second screen resolution; the target display parameter further includes a target encoding type and/or target screen resolution; and the target encoding type is an encoding type common to the first encoding type and the second encoding type, and the target screen resolution is screen resolution common to the first screen resolution and the second screen resolution.

According to a second aspect, this application provides a method for adjusting a display parameter for projection. The method includes: A large-screen device establishes a first projection screen connection to an electronic device, and the large-screen device establishes a second projection screen connection to a display device; the large-screen device receives a first display parameter sent by the electronic device, where the first display parameter includes a first encoding frame rate of the electronic device; the large-screen device receives a second display parameter sent by the display device, where the second display parameter includes a first decoding frame rate and a first display frame rate of the display device; the large-screen device obtains a display parameter 3 of the large-screen device, where the display parameter 3 includes a second encoding frame rate, a second decoding frame rate, and a second display frame rate; the large-screen device determines a target display parameter based on the first display parameter, the second display parameter, and the display parameter 3, where the target display parameter includes a target encoding frame rate, and the target encoding frame rate is less than or equal to a smallest value in the first encoding frame rate, the first decoding frame rate, the first display frame rate, the second encoding frame rate, the second decoding frame rate, and the second display frame rate; and the large-screen device encodes first projection content based on the target encoding frame rate in the target display parameter, and projects the first projection content to the display device.

By using the method according to the first aspect, when an external display screen is connected to a projection screen system, the new projection screen system negotiates display parameters of devices in the projection screen system, to avoid a problem that projection content displayed on the display screen is out of sync with audio when the external display screen is connected to the projection screen system, and improve user experience.

With reference to the method according to the first aspect, in a possible implementation, before the large-screen device encodes the first projection content based on the target encoding frame rate in the target display parameter, and projects the first projection content to the display device, the method further includes: The large-screen device sends the target display parameter to the electronic device, where the target display parameter is used to indicate the electronic device to encode second projection content at the target encoding frame rate and send the second projection content to the large-screen device; the large-screen device receives the second projection content sent by the electronic device; and the large-screen device displays the second projection content.

With reference to the method according to the first aspect, in a possible implementation, that the large-screen device establishes the first projection screen connection to the electronic device, and the large-screen device establishes the second projection screen connection to the display device specifically includes: After the large-screen device establishes the first projection screen connection to the electronic device, the large-screen device establishes the second projection screen connection to the display device; or after the large-screen device establishes the second projection screen connection to the display device, the large-screen device establishes the first projection screen connection to the electronic device.

With reference to the method according to the first aspect, in a possible implementation, before the large-screen device receives the first display parameter sent by the electronic device, the method further includes: The large-screen device sends a first request to the electronic device, where the first request is used to indicate the electronic device to send the first display parameter to the large-screen device.

With reference to the method according to the first aspect, in a possible implementation, that the large-screen device sends the first request to the electronic device specifically includes: The large-screen device sends the first request to the electronic device when the large-screen device determines that the second encoding frame rate is greater than the first decoding frame rate, the second encoding frame rate is greater than the first display frame rate, or the second encoding frame rate is less than the second display frame rate.

With reference to the method according to the first aspect, in a possible implementation, the first display parameter further includes a first encoding type and/or first screen resolution; the second display parameter further includes a second encoding type and/or second screen resolution; the target display parameter further includes a target encoding type and/or target screen resolution; and the target encoding type is an encoding type common to the first encoding type and the second encoding type, and the target screen resolution is screen resolution common to the first screen resolution and the second screen resolution.

According to a third aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform steps in the method that are performed by an electronic device according to any possible implementation of any one of the foregoing aspects.

According to a fourth aspect, this application provides a computer storage medium, including computer instructions. When the computer instructions are run on an electronic device, the electronic device is enabled to perform steps in the method that are performed by an electronic device according to any possible implementation of any one of the foregoing aspects.

According to a fifth aspect, an embodiment of this application provides a computer program product. When the computer program product runs on a computer, the electronic device is enabled to perform steps in the method that are performed by an electronic device according to any possible implementation of any one of the foregoing aspects.

According to a sixth aspect, an embodiment of this application provides a large-screen device, including one or more processors and one or more memories. The one or more memories are coupled to the one or more processors. The one or more memories are configured to store computer program code, and the computer program code includes computer instructions. When the one or more processors execute the computer instructions, the large-screen device is enabled to perform steps in the method that are performed by a large-screen device according to any possible implementation of any one of the foregoing aspects.

According to a seventh aspect, this application provides a computer storage medium, including computer instructions. When the computer instructions are run on a large-screen device, the large-screen device is enabled to perform steps in the method that are performed by a large-screen device according to any possible implementation of any one of the foregoing aspects.

According to an eighth aspect, an embodiment of this application provides a computer program product. When the computer program product runs on a computer, the large-screen device is enabled to perform steps in the method that are performed by a large-screen device according to any possible implementation of any one of the foregoing aspects.

According to a ninth aspect, an embodiment of this application provides a display device, including one or more processors and one or more memories. The one or more memories are coupled to the one or more processors. The one or more memories are configured to store computer program code, and the computer program code includes computer instructions. When the one or more processors execute the computer instructions, the display device is enabled to perform steps in the method that are performed by a display device according to any possible implementation of any one of the foregoing aspects.

According to a tenth aspect, this application provides a computer storage medium, including computer instructions. When the computer instructions are run on a display device, the display device is enabled to perform steps in the method that are performed by a display device according to any possible implementation of any one of the foregoing aspects.

According to an eleventh aspect, an embodiment of this application provides a computer program product. When the computer program product runs on a computer, the display device is enabled to perform steps in the method that are performed by a display device according to any possible implementation of any one of the foregoing aspects.

### BRIEF DESCRIPTION OF DRAWINGS

FIG. 1 is a schematic diagram of a system according to an embodiment of this application;
FIG. 2A to FIG. 2D-1 and FIG. 2D-2 are a set of UI diagrams according to an embodiment of this application;
FIG. 2E to FIG. 2F are a set of UI diagrams according to an embodiment of this application;
FIG. 3 is a flowchart illustrating a method in which an electronic device 100 negotiates a display parameter with a large-screen device 200 according to an embodiment of this application;
FIG. 3A to FIG. 3B are a set of UI diagrams of playing projection content 1 on an electronic device 100 according to an embodiment of this application;
FIG. 4(a) and FIG. 4(b) are a schematic diagram of a process in which a large-screen device 200 negotiates display parameters of an electronic device 100, the large-screen device 200, and a display device 300 according to an embodiment of this application;
FIG. 4A-1 and FIG. 4A-2 are a UI diagram of displaying multimedia content on an electronic device 100 according to an embodiment of this application;

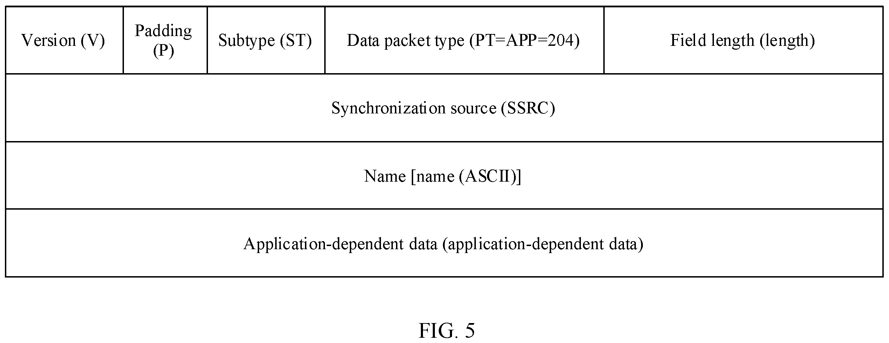

FIG. 5 is a schematic diagram of an RTCP data packet format according to an embodiment of this application;

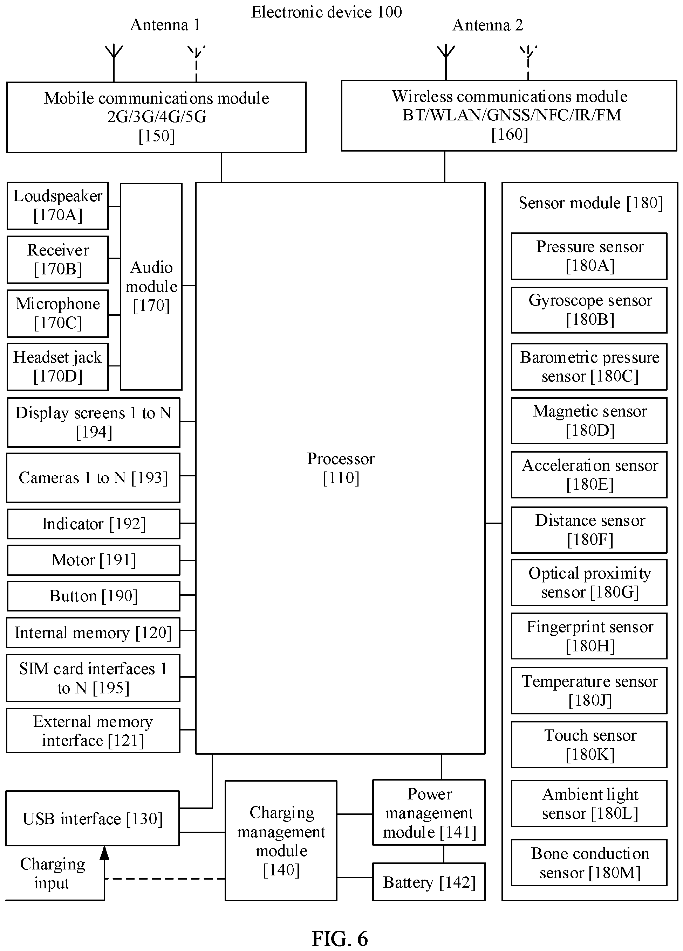

FIG. 6 is a schematic diagram of a structure of an electronic device 100 according to an embodiment of this application;

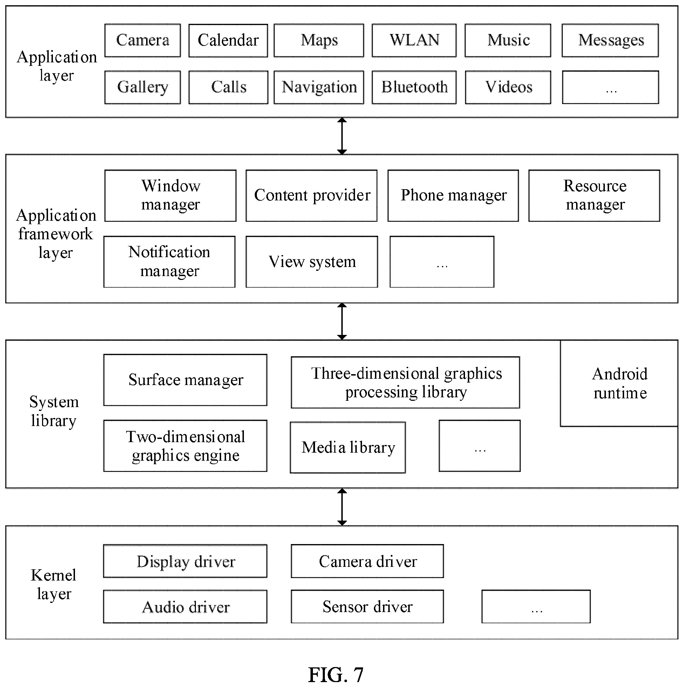

FIG. 7 is a block diagram of a software structure of an electronic device 100 according to an embodiment of this application;

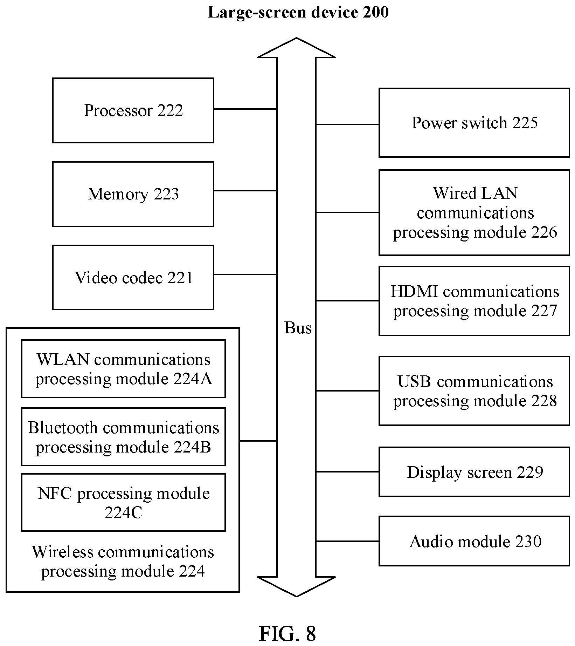

FIG. 8 shows a hardware structure of a large-screen device 200 according to an embodiment of this application; and

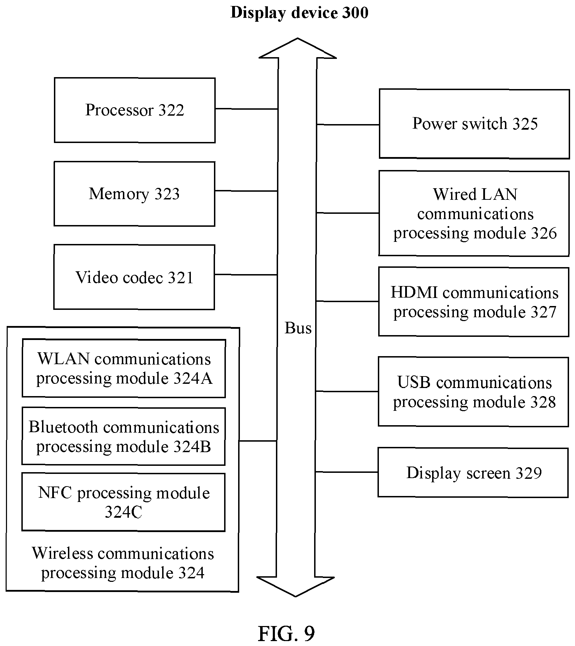

FIG. 9 shows a hardware structure of a display device 300 according to an embodiment of this application.

### DESCRIPTION OF EMBODIMENTS

Technical solutions in embodiments of this application are clearly and comprehensively described below with reference to the accompanying drawings. In the descriptions of embodiments of this application, "/" means "or" unless otherwise stated. For example, A/B may represent A or B. In the text, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of' means two or more.

The terms "first" and "second" used below are merely intended for a purpose of description, and shall not be understood as an indication or implication of relative importance or an implicit indication of a quantity of indicated technical features. Therefore, a feature limited by using "first " or "second" may explicitly indicate or implicitly include one or more such features. In the descriptions of embodiments of this application, unless otherwise stated, "a plurality of" means two or more.

The term "user interface (user interface, UI)" in the description, the claims, and the accompanying drawings of this application is a medium interface for interaction and information exchange between a user and an application or an operating system, and implements conversion between an internal form of information and a form acceptable to the user. A user interface of an application is source code written in a specific computer language, for example, Java or an extensible markup language (extensible markup language, XML). The interface source code is parsed and rendered on a terminal device, and is finally presented as user-recognizable content, for example, an image, text, a button, and another control. The control (control), also referred to as a widget (widget), is a basic element in the user interface. Typical controls include a toolbar (toolbar), a menu bar (menu bar), an input box (input box), a button (button), a scrollbar (scrollbar), an image, and text. An attribute and content of a control in an interface are defined by using a tag or a node. For example, the control included in the interface is defined in the XML by using a node, for example, <Textview>, <ImgView>, or <VideoView>. One node corresponds to one control or attribute in the interface. After being parsed and rendered, the node is presented as content visual for a user. In addition, a web page is usually further included in interfaces of many applications such as a hybrid application (hybrid application). A web page, also referred to as a page, may be understood as a special control embedded in an interface of an application. The web page is source code written in a specific computer language, for example, a hypertext markup language (hypertext markup language, HTML), cascading style sheets (cascading style sheets, CSS), or JavaScript (JavaScript, JS). The web page source code may be loaded and displayed as user-recognizable content by a browser or a web page display component that has a similar function as that of the browser. Specific content included in the web page is also defined by using a tag or a node in the web page source code. For example, an element and an attribute of the web page are defined in the HTML by using <p>, <img>, <video>, or <canvas>.

A user interface is usually represented in a form of a graphical user interface (graphical user interface, GUI), and is a user interface that is related to a computer operation and that is displayed graphically. The user interface may be an interface element, for example, a window or a control, displayed on a display screen of an electronic device.

At present, an electronic device 100 (for example, a mobile phone) may establish a projection screen connection to a large-screen device 200 (for example, a personal computer), and then the electronic device 100 projects projection content to and displays the projection content on the large-screen device 200. Before the electronic device 100 displays the projection content on the large-screen device 200, the electronic device 100 negotiates a projection screen parameter with the large-screen device 200. Specifically, the large-screen device 200 sends a display parameter to the electronic device 100. After receiving the display parameter sent by the large-screen device 200, the electronic device 100 negotiates the display parameter with the large-screen device 200 to obtain a target display parameter obtained through the negotiation. Then, the electronic device 100 processes the projection content based on the target display parameter obtained through the negotiation, and sends the projection content to the large-screen device 200. The large-screen device 200 receives and displays the projection content.

The negotiation of the display parameter between the electronic device 100 and the large-screen device 200 is described in detail in an embodiment below. Details are not described herein in this application.

The projection content may be a video, a picture, audio, a table, or the like.

A display parameter of the large-screen device 200 includes any one or more of the following: screen resolution, a display frame rate, a decoding frame rate, an encoding type, and the like.

A display parameter of the electronic device 100 includes any one or more of the following: screen resolution, an encoding frame rate, an encoding type, and the like.

The target display parameter includes any one or more of the following: screen resolution, an encoding type, an encoding frame rate, and the like.

However, when the large-screen device 200 is connected to an external display device 300, the large-screen device 200 processes the projection content based on the display parameter of the large-screen device 200, and sends the projection content to the display device 300. If a display frame rate or a decoding frame rate of the display device 300 is less than an encoding frame rate of the large-screen device 200, image frames on a display device 300 side are continuously accumulated, causing freezing on the display device 300 side; or because a central processing unit (central processing unit, CPU) of the large-screen device 200 has a limited capability, the encoding frame rate of the large-screen device 200 is less than the display frame rate of the large-screen device 200. Therefore, when the large-screen device 200 processes the projection content based on the encoding frame rate, image frames on a large-screen device 200 side are continuously accumulated. Before the large-screen device 200 sends the processed projection content to the display device 300, image frames are accumulated on the large-screen device 200 side. As a result, image frames displayed on the display device 300 side are out of sync with audio played on the large-screen device 200, and user experience is affected.

Therefore, the following embodiment of this application provides a method for adjusting a display parameter for projection. The method includes: A large-screen device establishes a first projection screen connection to an electronic device, and the electronic device establishes a second projection screen connection to a display device. The large-screen device obtains a target display parameter through negotiation based on a display parameter of the large-screen device, a display parameter of the electronic device, and a display parameter of the display device. The target display parameter includes a target encoding frame rate, so that the target encoding frame rate is less than a display frame rate or a decoding frame rate of the display device, or a display frame rate of the large-screen device 200 is greater than the target encoding frame rate. Then, the large-screen device processes projection content based on the target display parameter, and sends the projection content to the display device. In this way, a problem that projection content displayed on a display screen is out of sync with audio when the external display screen is connected to a projection screen system is resolved, and user experience is improved.

The projection screen connection may be a projection screen collaboration connection, a mirroring projection screen connection, or the like. A manner of the projection screen connection is not limited in this application. In the following embodiment of this application, a projection screen collaboration connection is used as an example for description.

A system architecture provided in an embodiment of this application is described below.

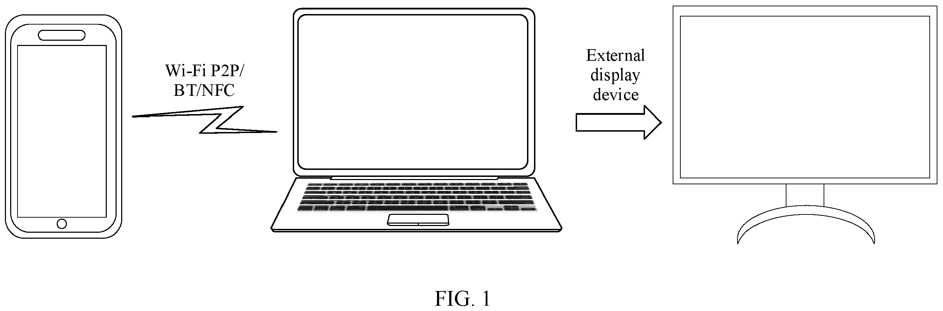

As shown in FIG. 1, FIG. 1 is a schematic diagram of a system according to an embodiment of this application.

First, an electronic device 100 establishes a projection screen connection to a large-screen device 200, that is, the electronic device 100 may project projection content to and display the projection content on the large-screen device 200. Then, a large-screen device 200 side may be connected to an external display device 300 through a USB interface or in another manner. In this way, the large-screen device 200 displays content displayed on the large-screen device 200 on the display device 300.

In some embodiments, the display device 300 may establish the connection to the large-screen device 200 through a USB interface after the electronic device 100 establishes the projection screen connection to the large-screen device 200. In some other embodiments, the display device 300 may establish the connection to the large-screen device 200 through a USB interface before the electronic device 100 establishes the projection screen connection to the large-screen device 200.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in this embodiment of this application. A software system on the electronic device 100 includes but is not limited to iOS^{®}, Android^{®}, Harmony^{®}, Windows^{®}, Linux, or another operating system. Harmony^{®} is Huawei's HarmonyOS.

The large-screen device 200 is an electronic device having a large-sized display screen, for example, a television, a desktop computer, or an electronic billboard.

The display device 300 is an image (for example, a video or a picture) output device, and may be configured to display an image (for example, a video or a picture).

When the electronic device 100 establishes the projection screen connection to the large-screen device 200, the electronic device 100 may be connected to and communicate with the large-screen device 200 by using a wireless communications technology. The wireless communications technology herein includes but is not limited to a wireless local area network (wireless local area network, WLAN) technology, Bluetooth (Bluetooth), infrared, near field communication (near field communication, NFC), ZigBee, and another wireless communications technology that has emerged in follow-up development. For ease of description, the following embodiment is described by using an example in which the electronic device 100 and the large-screen device 200 communicate with each other by using a wireless fidelity direct (wireless fidelity direct, Wi-Fi direct) (also referred to as a wireless fidelity peer-to-peer (wireless fidelity peer-to-peer, Wi-Fi P2P)) technology.

The electronic device 100 may be connected to the large-screen device 200 by joining, by using the Wi-Fi P2P technology, a Wi-Fi P2P group constructed by the large-screen display device 200. Then, the electronic device 100 sends time synchronization information (for example, handshake information) to the large-screen device 200 to perform network synchronization. With successful networking and completed synchronization, the large-screen device 200 in a collaboration network performs collaborative play, collaborative sound recording, collaborative conferencing, and the like under control of the electronic device 100. In other words, the electronic device 100 sends the projection content to the large-screen device 200 through an established Wi-Fi P2P connection, so that the large-screen device 200 displays and/or plays the projection content, thereby completing projection. The projection content may include but is not limited to an image (for example, a video or a picture) and audio.

In some embodiments, the display device 300 may establish the connection to the large-screen device 200 through the USB interface after the electronic device 100 establishes the projection screen connection to the large-screen device 200.

In this case, when the electronic device 100 establishes the projection screen connection to the large-screen device 200, a display parameter is negotiated to obtain a target display parameter. The electronic device 100 and the large-screen device 200 perform projection screen collaboration based on the target display parameter. The negotiation of the display parameter between the electronic device 100 and the large-screen device 200 is described in detail in an embodiment below. Details are not described herein in this application.

After the electronic device 100 establishes projection screen collaboration with the large-screen device 200, the large-screen device 200 is connected to the external display device 300 through the USB interface or the like. To ensure that freezing of projection content displayed on a display device 300 side does not occur when the large-screen device 200 displays the projection content on the display device 300, and the projection content displayed on the display device 300 side is in sync with sound on the large-screen device 200 side, when the large-screen device 200 is connected to the external display device 300, the large-screen device 200 (or the electronic device 100) negotiates display parameters of the electronic device 100, the large-screen device 200, and the display device 300, to obtain the target display parameter. Then, the electronic device 100 processes the projection content based on the target display parameter, and sends the projection content to the large-screen device 200. The large-screen device 200 further processes the projection content based on the target display parameter, and sends the projection content to the large-screen device display device 300. How the large-screen device 200 negotiates the display parameters of the electronic device 100, the large-screen device 200, and the display device 300 to obtain the target display parameter is described in detail in an embodiment below. Details are not described herein in this application.

In some other embodiments, before the electronic device 100 establishes the projection screen connection to the large-screen device 200, the display device 300 establishes the connection to the large-screen device 200 through the USB interface.

In this case, to ensure that freezing of the projection content displayed on the display device 300 side does not occur when the large-screen device 200 displays the projection content on the display device 300, and the projection content displayed on the display device 300 side is in sync with the sound on the large-screen device 200 side, when the electronic device 100 establishes projection screen collaboration with the large-screen device 200, the large-screen device 200 (or the electronic device 100) negotiates the display parameters of the electronic device 100, the large-screen device 200, and the display device 300, to obtain the target display parameter. Then, the electronic device 100 processes the projection content based on the target display parameter, and sends the projection content to the large-screen device 200. The large-screen device 200 further processes the projection content based on the target display parameter, and sends the projection content to the large-screen device display device 300. How the large-screen device 200 negotiates the display parameters of the electronic device 100, the large-screen device 200, and the display device 300 to obtain the target display parameter is described in detail in an embodiment below. Details are not described herein in this application.

With reference to a UI diagram, how the electronic device 100 establishes the projection screen connection to the large-screen device 200 is described in detail below.

The electronic device 100 may establish the projection screen connection to the large-screen device 200 in any one of the following manners.

### Manner 1:

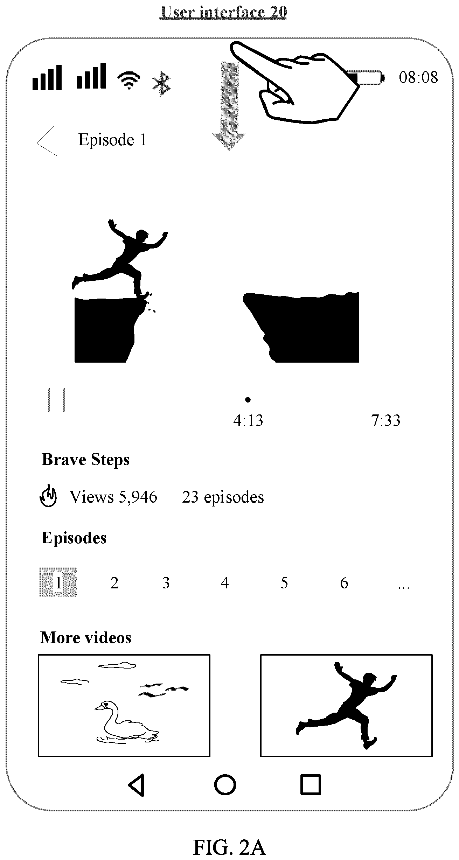

FIG. 2A to FIG. 2D-1 and FIG. 2D-2 show an example of a user operation that is detected by the electronic device 100 and that enables a projection screen collaboration function.

FIG. 2A shows an example of a video play user interface 20 on the mobile device 100. The following is displayed in the user interface 20: a title of a video (Brave Steps), a play progress of the video (Episode 1), a time length that a video has played (4 minutes and 13 seconds), a total time length of the video (7 minutes and 33 seconds), how popular the video is (5,946), total episodes that the video has (23 episodes), an icon "More videos", and images corresponding to "More videos".

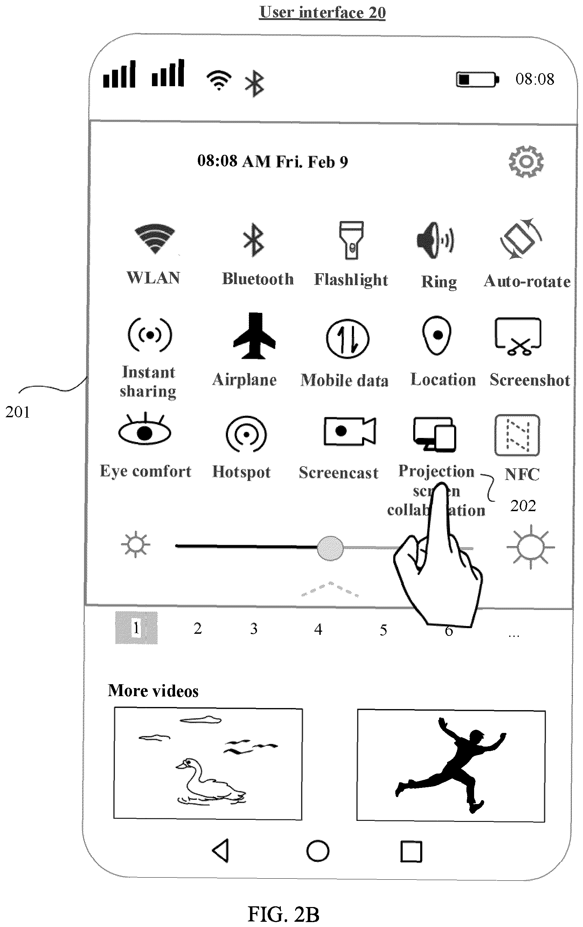

As shown in FIG. 2A and FIG. 2B, when the electronic device 100 detects a downward slide gesture on a display screen, the mobile device 100 displays a window 201 in the user interface 20 in response to the slide gesture. As shown in FIG. 2B, a control 202 may be displayed in the window 201. The control 202 may receive an operation (for example, a touch operation or a clicking operation) for enabling/disabling the projection screen collaboration function of the mobile device 100. A representation form of the control 202 may include an icon and/or text (for example, text "Projection screen collaboration"). Switch controls for other functions, for example, Wi-Fi, Bluetooth, Flashlight, Ring, Auto-Rotate, Instant sharing, Airplane, Mobile data, Location, Screenshot, Eye comfort, Hotspot, Screencast, and NFC may be further displayed in the window 201. That is, a user operation for enabling the projection screen collaboration function is detected. In some embodiments, after detecting the user operation on the control 202, the electronic device 100 may change a display form of the control 202, for example, add shadow when displaying the control 202.

A user may alternatively input a downward slide gesture in another interface other than a main interface shown in FIG. 2A, to trigger the electronic device 100 to display the window 201.

In this embodiment of this application, the user operation for enabling the projection screen collaboration function may alternatively be implemented in another form, not limited to the user operation of a user on the control 202 in the window 201 as shown in FIG. 2A and FIG. 2B. This is not limited in this embodiment of this application.

For example, the electronic device 100 may further display a setting interface provided by a settings (settings) application. The setting interface may include a control provided for the user to enable/disable the projection screen collaboration function of the electronic device 100. The user may enable the projection screen collaboration function of the electronic device 100 by inputting a user operation on the control.

When detecting the user operation for enabling the projection screen collaboration function, the electronic device 100 enables one or more of Wi-Fi direct (not shown in the figure), Bluetooth, or NFC in a wireless communications module 160, and discovers, through one or more of Wi-Fi direct, Bluetooth, and NFC, an electronic device, near the electronic device 100, to which a screen can be projected. For example, the electronic device 100 may discover the nearby large-screen device 200 and another nearby electronic device through Wi-Fi direct.

In addition to displaying an identifier of the electronic device that is discovered by the electronic device 100 and that supports projection screen collaboration, the electronic device 100 may further display other information, for example, an image of the discovered electronic device. This is not limited in this embodiment of this application.

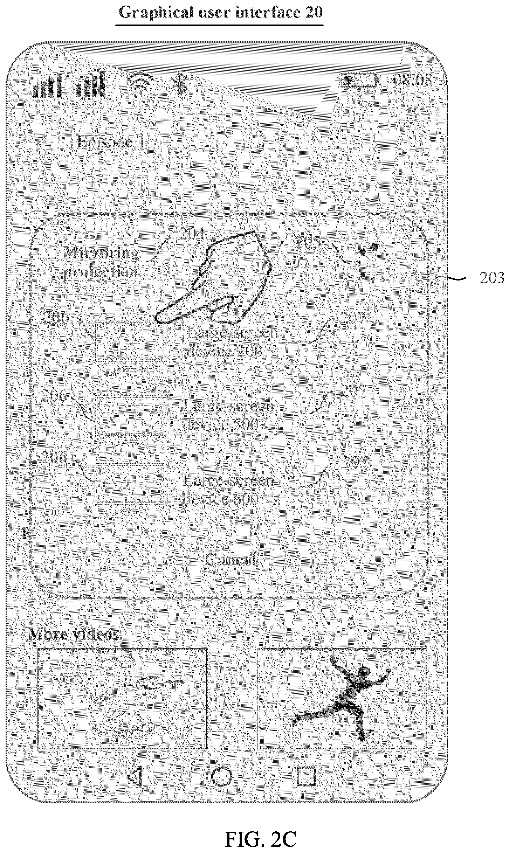

Then, for example, as shown in FIG. 2C, a window 203 is displayed on the electronic device 100. The window 203 includes an interface indicator 204, an icon 205, an image 206 and an identifier 207 of one or more electronic devices.

For example, as shown in FIG. 2C, a user operation of selecting the large-screen device 200 may be a user operation on the image 206 and/or the identifier 207 corresponding to the large-screen device 200. The user operation of selecting the large-screen device 200 may alternatively be implemented in another form. This is not limited in this embodiment of this application.

In response to the user operation, the electronic device 100 may establish a communication connection to the large-screen device 200 by using one or more wireless communications technologies of Wi-Fi direct, Bluetooth, and NFC. For example, the electronic device 100 establishes a Wi-Fi direct communication connection to the large-screen device 200. After the communication connection is established, the electronic device 100 and the large-screen device 200 may perform, based on the communication connection, negotiation of capabilities, including an encoding format, resolution, an audio format, an encoding frame rate, a display frame rate, a decoding frame rate, and the like that both support, to facilitate subsequent transmission of projection content.

Specifically, the electronic device 100 may obtain currently displayed multimedia content (including an image and/or audio) by screen recording, sound recording, or in another manner, compress the obtained content, and then send the obtained content to the large-screen device 200 through the communication connection to the large-screen device 200. For example, the electronic device 100 and the large-screen device 200 share the multimedia content according to Miracast. The electronic device 100 may obtain, according to specifications in the Miracast protocol, an image displayed on the display screen by screen recording, and compress the image by using an H.264 coding algorithm; collect audio played by the electronic device 100, and compress the audio by using an advanced audio coding (advanced audio coding, AAC) algorithm; and then encapsulate compressed audio data and image data into a transport stream (transport stream, TS), encode the TS according to a real-time transport protocol (real-time transport protocol, RTP), and directly send data obtained by encoding to the large-screen device 200 through a Wi-Fi direct connection. That is, the multimedia content is transmitted in a manner of streaming media.

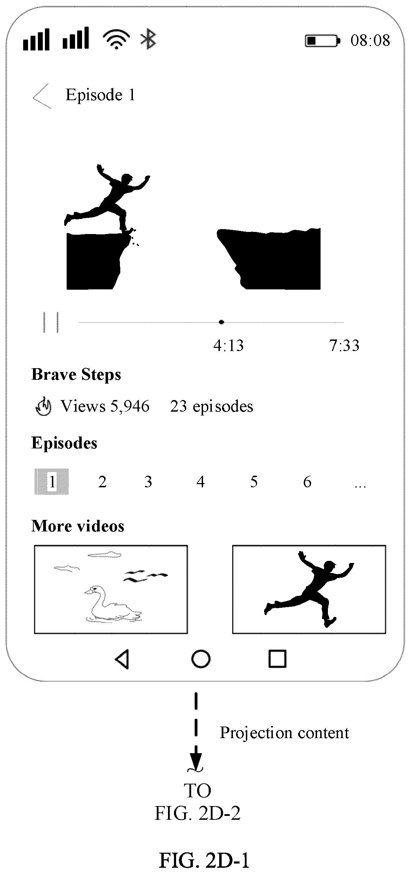

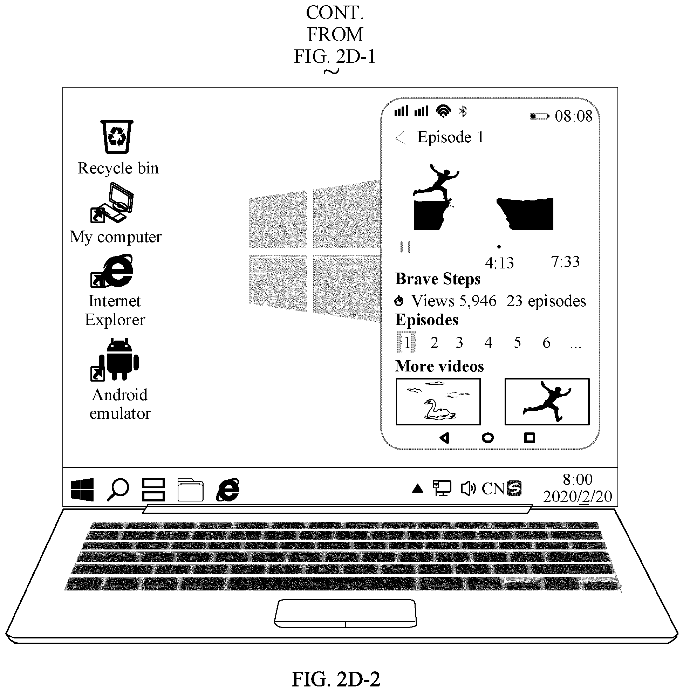

As shown in FIG. 2D-1 and FIG. 2D-2, the electronic device 100 transmits the currently displayed multimedia content (including the image and/or audio) to the large-screen device 200, and the large-screen device 200 receives the currently displayed multimedia content (including the image and/or audio) transmitted by the electronic device 100, and displays the multimedia content on a display screen of the large-screen device 200.

After receiving the multimedia content sent by the electronic device 100 through the communication connection, the large-screen device 200 may decode the multimedia content to obtain the multimedia content. For example, the electronic device 100 and the large-screen device 200 share the multimedia content according to Miracast. The large-screen device 200 may receive the TS encoded according to the RTP based on the Wi-Fi direct communication connection to the electronic device 100, and may perform RTP decoding, TS decapsulation, and sound and image quality processing/latency synchronization processing on the TS in sequence, to finally output a video and audio, that is, to play the multimedia content.

### Manner 2:

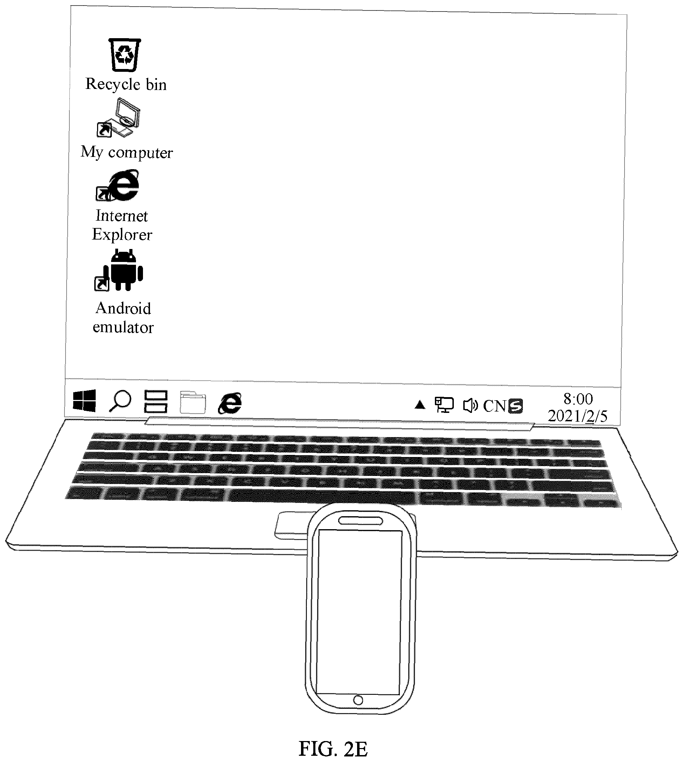

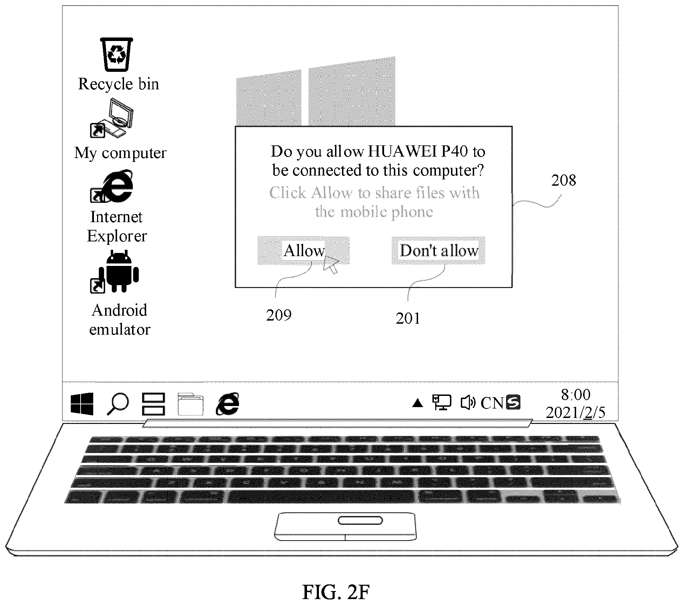

FIG. 2E and FIG. 2F show an example in which the electronic device 100 is close to an NFC-based sensing area of the large-screen device 200, to trigger the electronic device 100 to enable a projection screen collaboration function.

As shown in FIG. 2E, the electronic device 100 is close to the NFC-based sensing area of the large-screen device 200. The large-screen device 200 receives and responds to a connection request sent by the electronic device 100, and the large-screen device 200 displays a prompt box 208 shown in FIG. 2F on a display screen.

The prompt box 208 includes prompt information "Do you allow HUAWEI P40 to be connected to this computer?" "HUAWEI P40" is a device identifier of the electronic device 100.

The prompt box 208 further includes an Allow control 209 and a Don't allow control 210. The Allow control 209 may receive an input operation (for example, a click), and the large-screen device 200 establishes, in response to the input operation (for example, the click), a communication connection to the electronic device 100 through NFC. The Don't allow control 210 may receive an input operation (for example, a click), and the large-screen device 200 rejects, in response to the input operation (for example, the click), to establish a communication connection to the electronic device 100.

For example, when the Allow control 209 receives an input operation (for example, a click), the large-screen device 200 establishes, in response to the input operation (for example, the click), a communication connection to the electronic device 100 through NFC. After the communication connection is established, the electronic device 100 and the large-screen device 200 may perform, based on the communication connection, negotiation of capabilities, including an encoding format, resolution, an audio format, an encoding frame rate, a display frame rate, a decoding frame rate, and the like that both support, to facilitate subsequent transmission of projection content.

Specifically, the electronic device 100 may obtain currently displayed multimedia content (including an image and/or audio) by screen recording, sound recording, or in another manner, compress the obtained content, and then send the obtained content to the large-screen device 200 through the communication connection to the large-screen device 200. For example, the electronic device 100 and the large-screen device 200 share the multimedia content according to Miracast. The electronic device 100 may obtain, according to specifications in the Miracast protocol, an image displayed on the display screen by screen recording, and compress the image by using an H.264 coding algorithm; collect audio played by the electronic device 100, and compress the audio by using an advanced audio coding (advanced audio coding, AAC) algorithm; and then encapsulate compressed audio data and image data into a transport stream (transport stream, TS), encode the TS according to a real-time transport protocol (real-time transport protocol, RTP), and directly send data obtained by encoding to the large-screen device 200 through a Wi-Fi direct connection. That is, the multimedia content is transmitted in a manner of streaming media.

The electronic device 100 transmits the currently displayed multimedia content (including the image and/or audio) to the large-screen device 200, and the large-screen device 200 receives the currently displayed multimedia content (including the image and/or audio) transmitted by the electronic device 100, and displays the multimedia content on the display screen of the large-screen device 200. For details, refer to the embodiment shown in FIG. 2D-1 and FIG. 2D-2. Details are not described herein again in this application.

A process in which the electronic device 100 negotiates a display parameter with the large-screen device 200 after the electronic device 100 establishes a communication connection to the large-screen device 200 through Wi-Fi P2P.

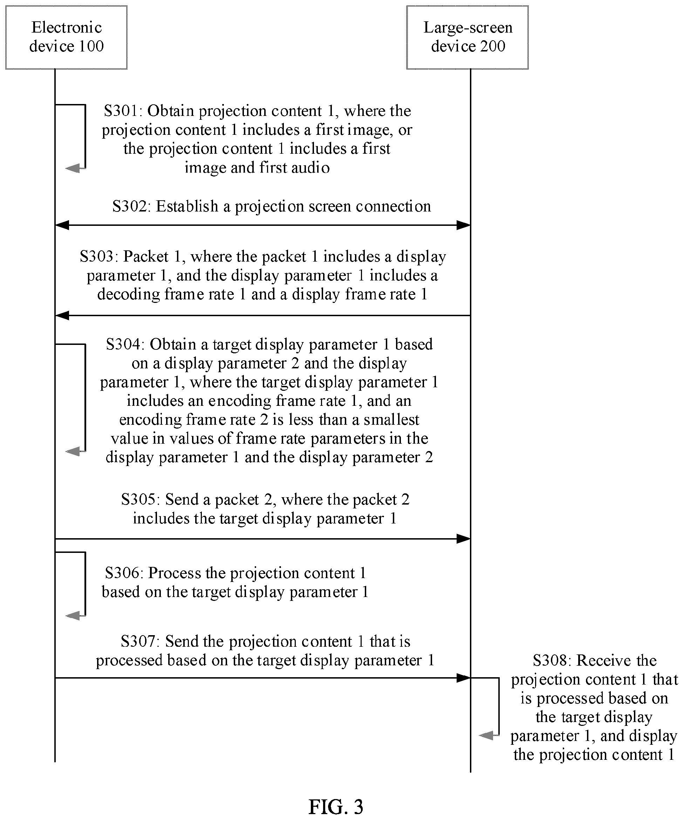

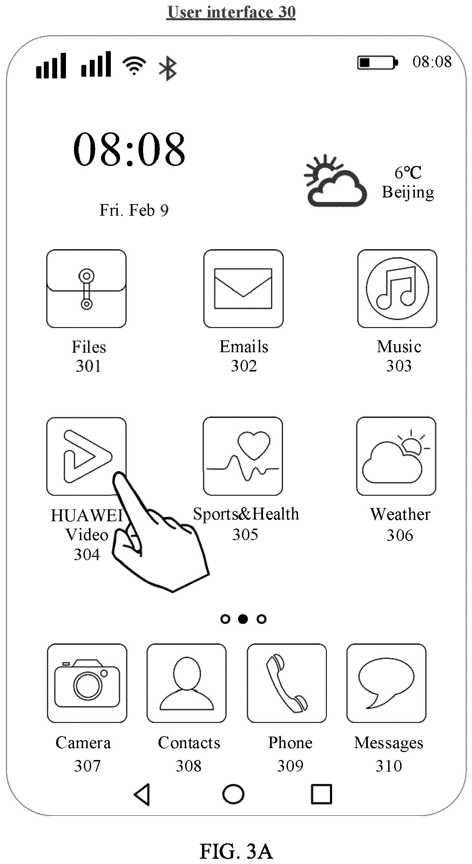

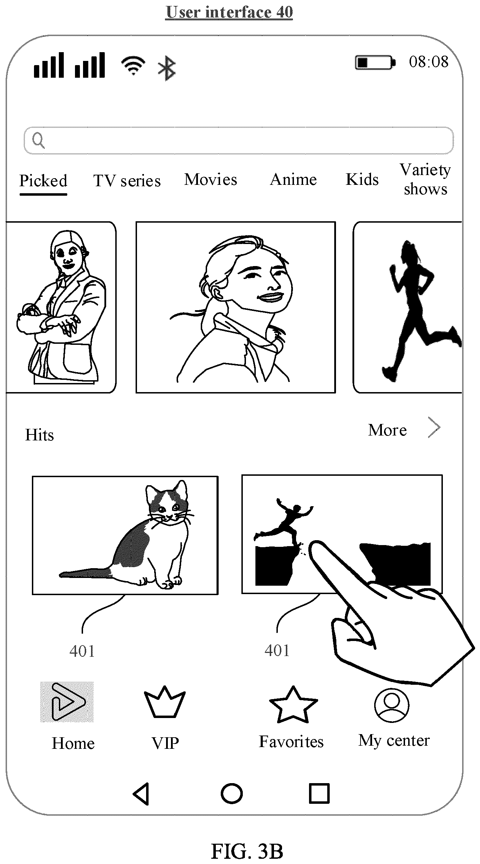

As shown in FIG. 3, FIG. 3 is an example flowchart of a method in which an electronic device 100 negotiates a display parameter with a large-screen device 200.

S301: An electronic device 100 obtains projection content 1, where the projection content 1 includes a first image, or the projection content 1 includes a first image and first audio.

The electronic device 100 may obtain the projection content 1 by screen recording, sound recording, and/or in another manner.

The projection content 1 may be multimedia content (including the first image or including the first image and the first audio) displayed by the electronic device 100 shown in FIG. 2D-1 and FIG. 2D-2.

The projection content 1 is content displayed by the electronic device 100 in real time.

It should be noted that the projection content 1 displayed by the electronic device 100 may alternatively include only the first image. A form of the projection content 1 is not limited in this application.

FIG. 3A and FIG. 3B show an example of UI diagrams of playing projection content 1 on the electronic device 100.

FIG. 3A shows an example of a user interface 30 on the electronic device 100. Icons of some applications may be included in the user interface 30. For example, there are an icon 301 of Files, an icon 302 of Emails, an icon 303 of Music, an icon 304 of HUAWEI Video, an icon 305 of Sports&Health, an icon 306 of Weather, an icon 307 of Camera, an icon 308 of Contacts, an icon 309 of Phone, and an icon 310 of Messages. In some embodiments, icons of more or fewer applications may be included in the user interface 30. In some embodiments, icons of applications that are different from the applications shown in FIG. 3A may be included in the user interface 30. This is not limited herein.

The electronic device 100 may respond to a user operation on the icon 304 of HUAWEI Video in the user interface 30, and start the video application. FIG. 3B shows an example of a user interface 40 displayed on the electronic device 100 after the video application is started. The user interface 40 is a home page provided by the application HUAWEI Video. As shown in FIG. 3B, one or more video images 401 are displayed in the user interface 40. The video image may be dynamic or static. In addition, a bottom menu bar, a search box, a sub-channel entry, and the like may be further displayed in the user interface 40. This is not limited in this embodiment of this application. As shown in FIG. 3B, the electronic device 100 may detect a user operation on the video image 401, obtain a network video indicated by the video image 401 from a server corresponding to the application HUAWEI Video by using a network, and play the network video. The network video indicated by the video image 401 on which the user operation is detected is a network video selected by a user. The electronic device 100 displays the video play user interface 20 shown in FIG. 2A. For descriptions of the video play user interface 20, refer to the descriptions of FIG. 2A. Details are not described herein again in this application.

S302: The electronic device 100 establishes a projection screen connection to the large-screen device 200.

For a process in which the electronic device 100 establishes the connection to the large-screen device 200, refer to the embodiments shown in FIG. 2A to FIG. 2D-1 and FIG. 2D-2, FIG. 2E, and FIG. 2F. Details are not described herein again in this application.

After the electronic device 100 establishes the connection to the large-screen device 200, the electronic device 100 negotiates a display parameter with the large-screen device 200. For details, refer to descriptions of S303 and S304.

S303: The electronic device 100 receives a packet 1 sent by the large-screen device 200, where the packet 1 includes a display parameter 1, and the display parameter 1 includes a decoding frame rate 1 and a display frame rate 1.

The display frame rate 1 is a quantity of image frames that can be displayed by the large-screen device 200 within a fixed amount of time (for example, 1s).

The decoding frame rate 1 is a quantity of image frames that are transmitted by the electronic device 100 and that can be decoded by the large-screen device 200 within a fixed amount of time (for example, 1s).

The display parameter 1 further includes another parameter, for example, screen resolution 1, and an encoding type 1. The display parameter 1 may further include more other parameters. This is not limited herein in this application.

The screen resolution 1 is quantities of pixels displayed by the large-screen device 200 in a horizontal direction and a horizontal direction. For example, the screen resolution 1 is 150×128, indicating that a quantity of pixels in a horizontal direction is 150 and a quantity of pixels in a vertical direction is 128.

The encoding type 1 includes a voice encoding type and an image stream encoding type. For example, the image stream encoding type includes any one of the following: Xvid, AVC/H.264, MPEG-1, and MPEG-2; and the voice encoding type includes any one of the following: MP3 and AAC. It should be noted that the image stream encoding type and the voice encoding type may alternatively be of another type. This is not limited herein in this application.

S304: The electronic device 100 obtains a target display parameter 1 based on a display parameter 2 and the display parameter 1, where the target display parameter 1 includes an encoding frame rate 1, and the encoding frame rate 2 is less than a smallest value in values of frame rate parameters in the display parameter 1 and the display parameter 2.

The display parameter 2 includes the encoding frame rate 2 of the electronic device 100. The encoding frame rate 2 is a quantity of audio data frames encoded by the electronic device 100 per second.

The display parameter 2 further includes another parameter, for example, screen resolution 2, and the encoding type 2. The display parameter 2 may further include more other parameters. This is not limited herein in this application.

After the electronic device 100 receives the display parameter 1 of the large-screen device 200, the electronic device 100 compares values of the display frame rate 1 and the decoding frame rate 1 that are in the display parameter 1 with a value of the encoding frame rate 2 in the display parameter 2, to obtain a smallest value in the three values, and determines the encoding frame rate 1 based on the smallest value in the three values. The encoding frame rate 1 is less than or equal to the smallest value in the display frame rate 1, the decoding frame rate 1, and the encoding frame rate 2.

The electronic device 100 further negotiates another parameter in the display parameter 1 and the display parameter 2, so that parameter information of another display parameter is consistent between the electronic device 100 and the electronic device 200.

For example, the electronic device 100 determines the screen resolution 2 in the display parameter 2. The electronic device 100 compares a value of the screen resolution 2 with a value of the screen resolution 1, to obtain a smallest value in the two values, and determines screen resolution 3 based on the smallest value in the two values. The screen resolution 3 is less than or equal to the smallest value in the screen resolution 2 and the screen resolution 1.

For example, the electronic device 100 further determines the encoding type 2 in the display parameter 2, and the electronic device 100 determines an encoding type common to the encoding type 2 and the encoding type 1 to be an encoding type 3 obtained through negotiation between the electronic device 100 and the electronic device 200. The encoding type 3 is any encoding type common to the encoding type 2 and the encoding type 1.

The electronic device 100 further negotiates another parameter in the display parameter 1 and the display parameter 2. Details are not described herein in this application.

Therefore, in addition to the encoding frame rate 1, the target display parameter 1 further includes the encoding type 3 and the screen resolution 3. The target display parameter 1 may further include another parameter. Details are not described herein in this application.

S305: The electronic device 100 sends a packet 2 to the large-screen device 200, where the packet 2 includes the target display parameter 1.

The target display parameter 1 includes the encoding frame rate 1. The target display parameter 1 may further include the screen resolution 3 and the encoding type 3.

The electronic device 100 sends the packet 2 to the large-screen device 200, where the packet 2 includes the target display parameter 1. In response to the packet 2 sent by the electronic device 100 to the large-screen device 200, the large-screen device 200 receives the packet 2 sent by the electronic device 100 to the large-screen device 200.

S306: The electronic device 100 processes the projection content 1 based on the target display parameter 1.

S307: The electronic device 100 sends, to the large-screen device 200, the projection content 1 that has been processed based on the target display parameter 1.

The electronic device 100 may obtain the projection content 1 by screen recording, sound recording, and/or in another manner, and process the projection content 1 based on the target display parameter 1, to obtain the projection content 1 that has been processed based on the target display parameter 1.

The electronic device 100 compresses the projection content 1 that has been processed based on the target display parameter 1, and then sends the projection content 1 that has been processed based on the target display parameter 1 to the large-screen device 200.

S308: The large-screen device 200 receives the projection content 1 that has been processed based on the target display parameter 1, and displays the projection content 1.

In response to the projection content 1 that has been processed based on the target display parameter 1 and that is sent by the electronic device 100, the large-screen device 200 receives the projection content 1 that has been processed based on the target display parameter 1, and then decodes the projection content 1 that has been processed based on the target display parameter 1 at a second decoding rate and performs sound and image quality processing in sequence. Then, the large-screen device 200 displays the projection content 1. As shown in FIG. 2D-1 and FIG. 2D-2, FIG. 2D-1 and FIG. 2D-2 are a schematic diagram in which the large-screen device 200 displays the projection content 1. A value of the second decoding rate is the same as a value of the encoding frame rate 1.

After the electronic device 100 establishes the projection screen connection to the large-screen device 200, the electronic device 100 may project the projection content to and display the projection content on the large-screen device 200. Then, a large-screen device 200 side may be connected to an external display device 300 through a USB interface or in another manner. The large-screen device 200 then negotiates display parameters of the electronic device 100, the large-screen device 200, and the display device 300. A process in which the large-screen device 200 negotiates the display parameters of the electronic device 100, the large-screen device 200, and the display device 300 is described in detail below.

In some embodiments, alternatively, the electronic device 100 may negotiate the display parameters of the electronic device 100, the large-screen device 200, and the display device 300. A device that negotiates the display parameters is not limited in this application. An example in which the large-screen device 200 negotiates the display parameters of the electronic device 100, the large-screen device 200, and the display device 300 is used in an embodiment of this application below for detailed description.

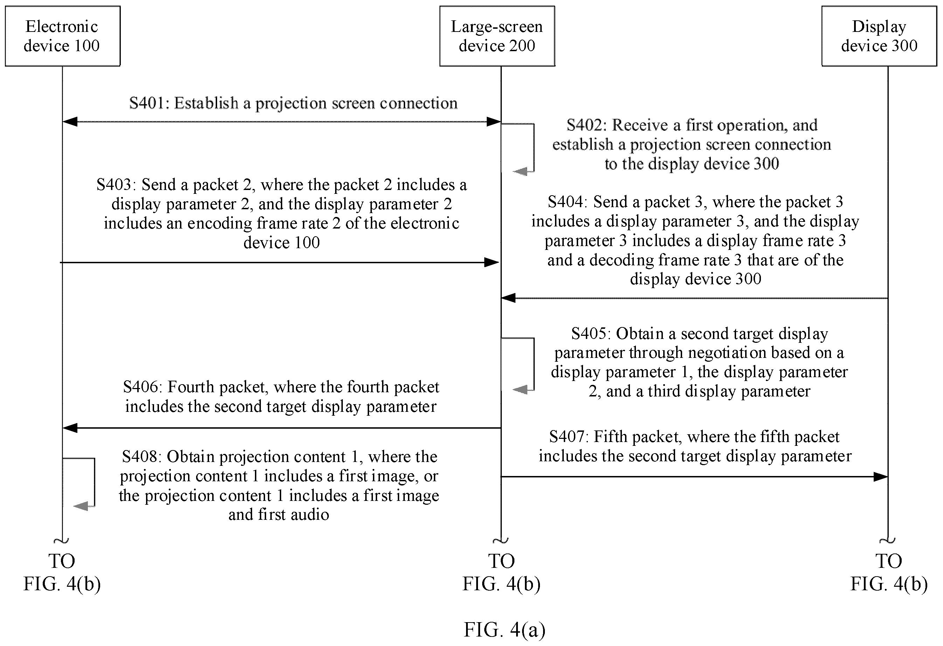

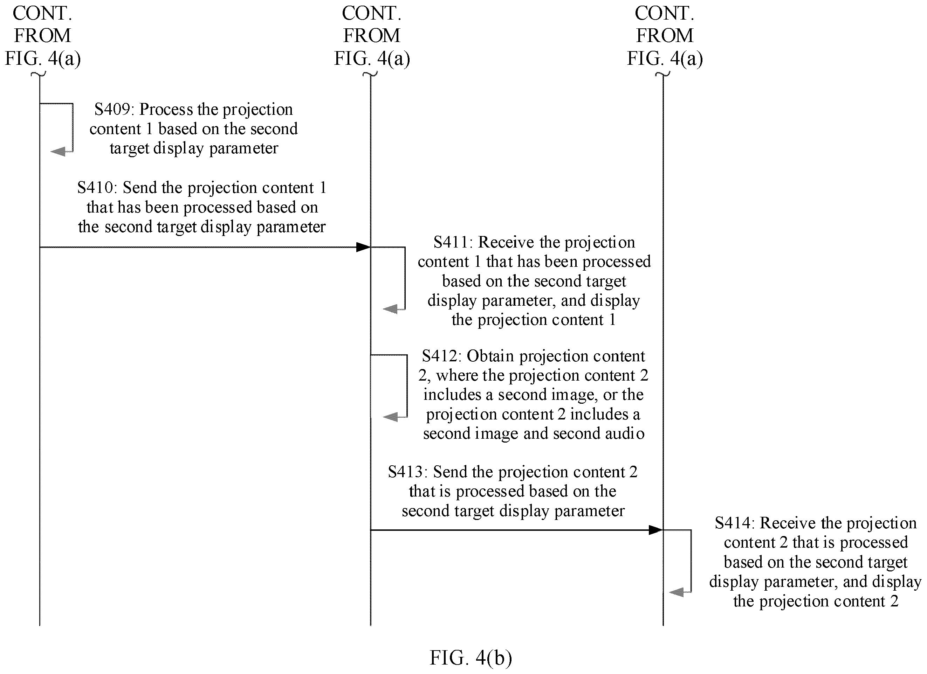

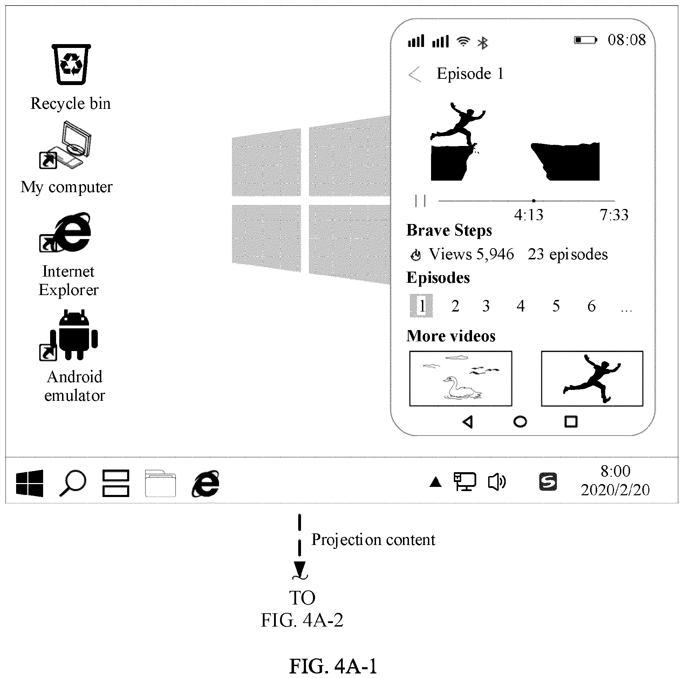

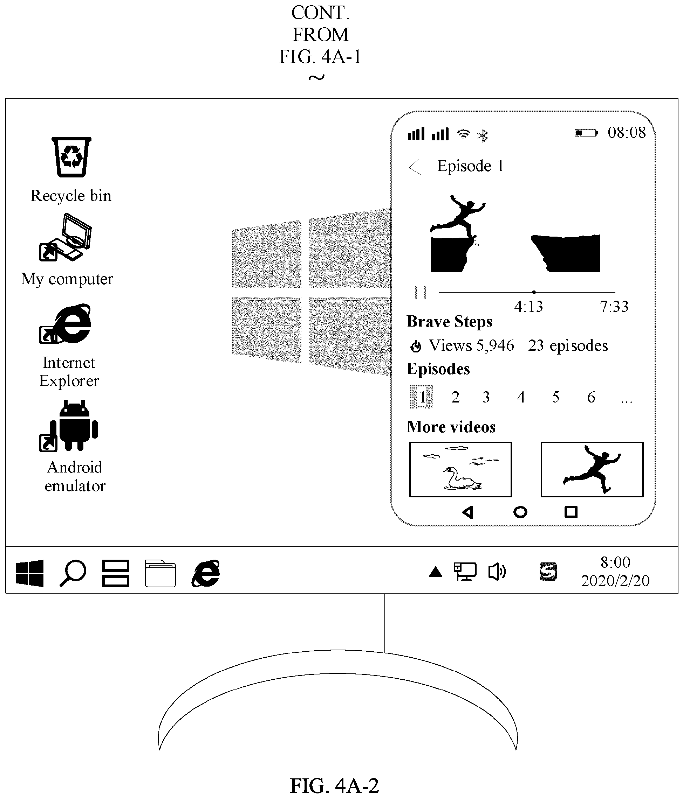

As shown in FIG. 4(a) and FIG. 4(b), FIG. 4(a) and FIG. 4(b) are a schematic diagram of an example of a process in which a large-screen device 200 negotiates display parameters of an electronic device 100, the large-screen device 200, and a display device 300.

S401: An electronic device 100 establishes a projection screen connection (a first projection screen connection) to a large-screen device 200.

For a process in which the electronic device 100 establishes the projection screen connection to the large-screen device 200, refer to the embodiments shown in FIG. 2A to FIG. 2D-1 and FIG. 2D-2, FIG. 2E, and FIG. 2F. Details are not described herein again in this application.

After the electronic device 100 establishes the projection screen connection to the large-screen device 200, the electronic device 100 negotiates a display parameter with the large-screen device 200. After negotiating the display parameter with the large-screen device 200, the electronic device 100 obtains a target display parameter 1, where the target display parameter 1 includes an encoding frame rate 2, third screen resolution, an encoding type 3, and the like. For a process in which the electronic device 100 negotiates a display parameter with the large-screen device 200, refer to the embodiment shown in FIG. 3. Details are not described herein again in this application.

S402: The large-screen device 200 receives a first operation, and the large-screen device 200 establishes a connection (a second projection screen connection) to a display device 300.

A large-screen device 200 side may be connected to the external display device 300 through a USB interface or the like, and the large-screen device 200 establishes the connection to the display device 300 by using a USB data wire.

In some embodiments, before the large-screen device 200 establishes the projection screen connection to the display device 300, the large-screen device 200 has established the connection to the display device 300 in advance. That is, there may not be S402.

S403: The electronic device 100 sends a packet 2 to the large-screen device 200, where the packet 2 includes a display parameter 2 (a first display parameter).

The display parameter 2 includes an encoding frame rate 2 (a first encoding frame rate) of the electronic device 100. The display parameter 1 may further include screen resolution 2 (first screen resolution), an encoding type 2 (a first encoding type), and the like.

S404: The display device 300 sends a packet 3 to the large-screen device 200, where the packet 3 includes a display parameter 3 (a second display parameter), and the display parameter 3 includes a display frame rate 3 (a first display frame rate) and a decoding frame rate 3 (a first decoding frame rate) that are of the display device 300.

The display frame rate 3 is a quantity of image frames that can be displayed by the display device 300 within a fixed amount of time (for example, 1s).

The decoding frame rate 3 is a quantity of image frames that are transmitted by the large-screen device 200 and that can be decoded by the display device 300 within a fixed amount of time (for example, 1s).

The display parameter 3 further includes another parameter, for example, screen resolution 4 (second screen resolution), and an encoding type 4 (a second encoding type). The display parameter 3 may further include more other parameters. This is not limited herein in this application.

The screen resolution 4 is quantities of pixels displayed by the display device 300 in a horizontal direction and a horizontal direction. For example, the screen resolution 4 is 160×128, indicating that a quantity of pixels in a horizontal direction is 160 and a quantity of pixels in a vertical direction is 128.

The encoding type 4 includes a voice encoding type and an image stream encoding type. For example, the image stream encoding type includes any one of the following: Xvid, AVC/H.264, MPEG-1, and MPEG-2; and the voice encoding type includes any one of the following: MP3 and AAC. It should be noted that the image stream encoding type and the voice encoding type may alternatively be of another type, for example, an image quality or a color. This is not limited herein in this application.

In some embodiments, before the large-screen device 200 establishes the projection screen connection to the display device 300, the large-screen device 200 has established the connection to the display device 300 in advance. In this case, the electronic device 100 needs to send the display parameter 2 of the electronic device 100 to the large-screen device 200.

S405: The large-screen device 200 obtains a second target display parameter through negotiation based on the display parameter 1 (a third display parameter), the display parameter 2, and the display parameter 3.

After the large-screen device 200 receives the display parameter 2 sent by the electronic device 100 and the display parameter 3 sent by the display device 300, the large-screen device 200 obtains the display parameter 1 of the large-screen device 200.

The display parameter 1 includes an encoding frame rate 3 (a third encoding frame rate), a decoding frame rate 1 (a second decoding frame rate), and a display frame rate 1 (a second display frame rate) that are of the large-screen device 200. The display parameter 1 may further include screen resolution 1 (third screen resolution), an encoding type 1 (a third encoding type), and the like.

The display parameter 2 includes the encoding frame rate 2 of the electronic device 100. The display parameter 1 may further include the screen resolution 2, the encoding type 2, and the like.

The display parameter 3 includes a display frame rate 2 and a decoding frame rate 2 that are of the display device 300. The display parameter 3 further includes the encoding type 4 and the screen resolution 4 that are of the display device 300.

The large-screen device 200 then compares values of the encoding frame rate 3, the decoding frame rate 1, and the display frame rate 1 that are in the display parameter 1 with a value of the encoding frame rate 2 in the display parameter 2 and values of the display frame rate 2 and the decoding frame rate 2 that are in the display parameter 3, to obtain a smallest value in the five frame rate parameters, and determines the encoding frame rate 4 (a target encoding frame rate) based on the smallest value in the five frame rate parameters. The encoding frame rate 4 is less than or equal to the smallest value in the encoding frame rate 3, the decoding frame rate 1, the display frame rate 1, the encoding frame rate 2, the display frame rate 2, and the decoding frame rate 2.

The large-screen device 200 further negotiates another parameter in the display parameter 1, the display parameter 2, and the third target display parameter, so that parameter information of another display parameter is consistent between the electronic device 100, the large-screen device 200, and the display device 300.

For example, the large-screen device 200 determines values of the screen resolution 1, the screen resolution 2, and the screen resolution 4 that are in the display parameter 3, to obtain a smallest value in the three values, and determines screen resolution 5 (target screen resolution) based on the smallest value in the three values. The screen resolution 5 is less than or equal to the smallest value in the screen resolution 1, the screen resolution 2, and the screen resolution 4.

For example, the large-screen device 200 further determines an encoding type common to the encoding type 1, the encoding type 2, and the encoding type 4 to be an encoding type 5 (a target encoding type) obtained through negotiation between the electronic device 100, the large-screen device 200, and the display device 300. The encoding type 5 is any encoding type common to the encoding type 1, the encoding type 2, and the encoding type 4.

The large-screen device 200 further negotiates another parameter in the display parameter 1, the display parameter 2, and the display parameter 3. Details are not described herein in this application.

Therefore, in addition to the encoding frame rate 4, the second target display parameter (target display parameter) further includes the encoding type 5 and the screen resolution 5. The second target display parameter may further include another parameter. Details are not described herein in this application.

S406: The large-screen device 200 sends a packet 4 to the electronic device 100, where the packet 4 includes the second target display parameter.

In some embodiments, the packet 4 may also be referred to as a first newly extended RTCP APP packet. The first newly extended RTCP APP packet includes key projection screen factor adjustment information. The key projection screen factor adjustment information may be the second target display parameter, for example, the encoding frame rate 4, the encoding type 5, and the screen resolution 5.

S407: The large-screen device 200 sends a packet 5 to the display device 300, where the packet 5 includes the second target display parameter.

The second target display parameter includes the encoding frame rate 4. The target display parameter 1 may further include the screen resolution 5 and the encoding type 5.

The large-screen device 200 sends the packet 4 to the electronic device 100, where the packet 4 includes the second target display parameter. In response to the packet 4 sent by the large-screen device 200 to the electronic device 100, the electronic device 100 receives the packet 4 sent by the large-screen device 200.

At the same time, the large-screen device 200 sends the packet 5 to the display device 300, where the packet 5 includes the second target display parameter. In response to the packet 5 sent by the large-screen device 200 to the display device 300, the display device 300 receives the packet 5 sent by the large-screen device 200.

In some embodiments, the large-screen device 200 may not send the packet 5 to the display device 300, that is, there may not be S407. This is not limited herein in this application.

In some embodiments, before the large-screen device 200 receives the first display parameter sent by the electronic device 100, the large-screen device 200 sends a first request to the electronic device 100. The first request is used to indicate the electronic device 100 to send the first display parameter to the large-screen device.

In some embodiments, a packet including the first request may also be referred to as a second newly extended RTCP APP packet. The second newly extended RTCP APP packet includes key projection screen factor adjustment information. The key projection screen factor adjustment information may be the first request. The first request is used to indicate the electronic device 100 to send the first display parameter to the large-screen device.

In some embodiments, when the large-screen device 200 determines that the second encoding frame rate is greater than the first decoding frame rate, the second encoding frame rate is greater than the first display frame rate, or the second encoding frame rate is less than the second display frame rate, the large-screen device sends the first request to the electronic device.

That is, the large-screen device 100 determines that a current display parameter does not satisfy a requirement of a load, and a displayed image is out of sync with audio on the load. The large-screen device 200 then sends the first request to the electronic device 100.

S408: The electronic device 100 obtains projection content 1, where the projection content 1 includes a first image, or the projection content 1 includes a first image and first audio.

In some embodiments, the electronic device 100 may obtain the projection content 1 by screen recording, sound recording, and/or in another manner.

The projection content 1 may be multimedia content (including the first image or including the first image and the first audio) displayed by the electronic device 100 shown in FIG. 2D-1 and FIG. 2D-2.

The projection content 1 is content displayed by the electronic device 100 in real time.

It should be noted that the projection content 1 displayed by the electronic device 100 may alternatively include only the first image. A form of the projection content 1 is not limited in this application.

S409: The electronic device 100 processes the projection content 1 (second projection content) based on the second target display parameter (the target display parameter).

S410: The electronic device 100 sends, to the large-screen device 200, the projection content 1 that has been processed based on the second target display parameter.

The electronic device 100 may obtain the projection content 1 by screen recording, sound recording, and/or in another manner, and process the projection content 1 based on the second target display parameter, to obtain the projection content 1 that has been processed based on the second target display parameter.

The electronic device 100 compresses the projection content 1 that has been processed based on the second target display parameter, and then sends the projection content 1 that has been processed based on the second target display parameter to the large-screen device 200.

S411: The large-screen device 200 receives the projection content 1 that has been processed based on the second target display parameter, and displays the projection content 1.

In response to the projection content 1 that has been processed based on the second target display parameter and that is sent by the electronic device 100, the large-screen device 200 receives the projection content 1 that has been processed based on the second target display parameter, and then decodes the projection content 1 that has been processed based on the second target display parameter at a fourth decoding frame rate and performs sound and image quality processing in sequence. Then, the large-screen device 200 displays the projection content 1. As shown in FIG. 2D-1 and FIG. 2D-2, FIG. 2D-1 and FIG. 2D-2 are a schematic diagram in which the large-screen device 200 displays the projection content 1. A value of the fourth decoding frame rate is the same as a value of the encoding frame rate 4.

S412: The large-screen device 200 obtains projection content 2 (first projection content) by screen recording, sound recording, and/or in another manner, where the projection content 2 includes a second image, or the projection content 2 includes a second image and second audio.

The projection content 2 may be multimedia content (including an image and/or audio) displayed by the electronic device 100 shown in FIG. 4A-1 and FIG. 4A-2.

The second image is content displayed by the large-screen device 200 in real time.

It should be noted that the projection content 2 displayed by the large-screen device 200 may alternatively include only the second audio. A form of the projection content 2 is not limited in this application.

S413: The large-screen device 200 sends the projection content 2 that is processed based on the second target display parameter.

The large-screen device 200 compresses the projection content 2 that has been processed based on the second target display parameter, and then sends the projection content 2 that has been processed based on the second target display parameter to the display device 300.

S414: The display device 300 receives the projection content 2 that is processed based on the second target display parameter, and displays the projection content 2.

In response to the projection content 2 that has been processed based on the second target display parameter and that is sent by the large-screen device 200, the display device 300 receives the projection content 2 that has been processed based on the second target display parameter, and then decodes the projection content 2 that has been processed based on the second target display parameter at the fourth decoding frame rate and performs sound and image quality processing in sequence. Then, the display device 300 displays the projection content 2. As shown in FIG. 4A-1 and FIG. 4A-2, FIG. 4A-1 and FIG. 4A-2 are a schematic diagram in which the display device 300 displays the projection content 2. A value of the fourth decoding frame rate is the same as a value of the encoding frame rate 4.

It should be noted that, in the method shown in FIG. 4(a) and FIG. 4(b), the large-screen device 200 obtains the target display parameter through negotiation based on the first display parameter of the electronic device 100, the second display parameter of the display device 300, and the third display parameter of the large-screen device 200. In this embodiment of this application, alternatively, the electronic device 100 may obtain the target display parameter through negotiation based on the first display parameter of the electronic device 100, the second display parameter of the display device 300, and the third display parameter of the large-screen device 200. Specifically, when the large-screen device 200 determines that the second encoding frame rate is greater than the first decoding frame rate, the second encoding frame rate is greater than the first display frame rate, or the second encoding frame rate is less than the second display frame rate, the electronic device 100 sends the second display parameter of the display device 300 and the third display parameter of the large-screen device 200 to the electronic device 100, and the electronic device 100 obtains the target display parameter through negotiation based on the first display parameter of the electronic device 100, the second display parameter of the display device 300, and the third display parameter of the large-screen device 200. A method for the electronic device 100 to obtain the target display parameter through negotiation based on the first display parameter of the electronic device 100, the second display parameter of the display device 300, and the third display parameter of the large-screen device 200 is the same as a method for the large-screen device 200 to obtain the target display parameter through negotiation based on the first display parameter of the electronic device 100, the second display parameter of the display device 300, and the third display parameter of the large-screen device 200. Details are not described herein again in this application.

With reference to a specific extension protocol, how the electronic device 100, the large-screen device 200, and the display device 300 negotiate a display parameter according to the extension protocol is described below.

Implementation of the extension protocol in this application is to improve projection service quality and expand a capability set of key impact factors on the basis of an existing RTCP (that includes only transmission quality, for example, a quantity of lost packets, a quantity of sent packets, and the like).

As shown in FIG. 5, FIG. 5 is a schematic diagram of an RTCP data packet format according to an embodiment of this application.

As shown in Table 1, Table 1 shows an example of fields included in the RTCP data packet shown in FIG. 5 and meanings of the fields.

**Table 1**

| Field | Description | Extended content |
|---|---|---|
| V | 2 bits; Version number: 2 | None |
| P | 1 bit; A value of P indicates whether there is padding information | None |
| ST | 5 bits | **Projection manager capability change request** |
| PT | 8 bits; When a value is 204, a packet format=APP | None |
| length L | 16 bits | None |
| SSRC | 4 bytes; Synchronization source identifier | None |
| name | 32 bits | **Projection service (Cast Plus)** |
| Application-dependent data A | L-64 | **[Color (color)]** |
| | | **Color mode: SRGB/P3/Adobe** |
| | | **Color range: full/limited** |
| | | **Color primary: BT.601 PAL** |
| | | **Transfer characteristic: BT.601** |
| | | **Matrix system: BT.470** |
| | | **[Basic image format]** |
| | | **Encoding form: H.264/AVC;** |
| | | **H.265/HEVC; and H.266P8/P9** |
| | | **Frame rate:** |
| | | **25 fps/30 fps/60 fps/90 fps/120 fps** |
| | | **Bit rate: xx Mbps** |
| | | **Frame interval: 1.0/2.0 or the like** |
| | | **GOP: i-frame-interval×frame-rate** |
| | | **[Image quality]** |
| | | **maxQP=51** |
| | | **minQP=12** |
| | | **[Display size]** |
| | | **Height=2,400** |
| | | **Width=1,080** |

As shown in Table 1, a field version (version, V) indicates that a version number of a current protocol is 2, and a size of the field V is 2 bits. The field V is not improved or extended in this application.

A field padding (padding, P) indicates a padding mark, and a size of the field P is 1 bit. The end of the packet contains one or more padding bytes, and a padding bit indicates that the packet has been padded to be greater than a natural size. When a value of the field P is set to 1, it indicates that there is a padding bit at the end of the data packet. When the value of the field P is set to 0, it indicates that there is a padding bit at the end of the data packet. The last byte in the padding byte is a padding bit count that indicates how many padding bits are added. The field P is not improved or extended in this application.

A field subtype (subtype, ST): A size of the field subtype is 5 bits, allowing a group of APP data packets to be defined with a unique name or for any definition data related to an application. When a bit 7 is 1, a receiver requests a sender to change a key projection capability set. When the bit 7 is 0, the sender responds to the receiver with a changed key projection capability set. The bit 7 to a bit 3 are reserved. In this application, a field PT is extended, and an extended part includes a request for changing a projection extension capability set.

A field data packet type (packet type, PT): When PT is a constant 204, a packet is identified as an RTCP APP data packet. The field PT indicates a type of a packet, and a size of the field PT is 8 bits. The RTP specification has defined five standard packet types, but there is no limitation to the five standard packet types, and there may further be other five standard packet types. If a value of the field PT is 204, a packet format is an APP format. The field PT is not improved or extended in this application.

A field synchronization source identifier (SSRC): A size of the field SSRC is 2 bytes. A synchronization source identifier is used to identify a synchronization source. The identifier is randomly selected. To ensure that any two synchronization source identifiers in a same RTP session are different, the RTP has to detect and resolve a conflict. The field SSRC is not improved or extended in this application.

A field name (name) represents a user-defined name of an application. The field is a name selected by a person who defines an APP data packet set. A creator of the application may select to use a name of the application, and then coordinate assignment of subtypes for application of others to define a value of a new data packet type. In addition, the name is explained as a sequence of four ASCII characters, and upper and lower case characters are considered different. A UI and the field name (name) are extended in this application. The field name (name) includes a projection service (Cast Plus).

A field application-dependent data (application-dependent data A): The field is used to identify content of a data packet, and a data length is 64 bits. Extended content of the field application-dependent data A includes a color (color), including a color mode: SRGB/P3/Adobe, a color range: full/limited, a color primary: BT.601 PAL, a transmission characteristic: BT.601, and a matrix system: BT.470; a basic image format, including an encoding form: H.264/AVC, H.265/HEVC, and H.266P8/P9, a frame rate: 25 fps/30 fps/60 fps/90 fps/120 fps,
a bit rate: xx Mbps, a frame interval: 1.0/2.0, or the like, and GOP: i-frame-interval×frame-rate; image quality: maxQP=51, and
minQP=12; and a display size: a height=2,400, and a width=1,080.

A field length (Length) indicates a total length of a header plus data in a unit of bytes, and a total length field is 16 bits. Each type of data link layer has a particular frame format, including a maximum length of a data field in the frame format. This is called a maximum transmission unit (MTU). When an IP datagram is encapsulated into a frame in a link layer, a total length of the datagram cannot be greater than a value of a corresponding MTU. If the length of the datagram is greater than the value of the MTU, the datagram is fragmented. In this case, a field "total length" in a header of the datagram indicates a sum of a header length and a data length of each fragment after the fragmentation. The field length (Length) is not improved or extended in this application.

The field SSRC: A size of a synchronization source is 4 bytes, and a synchronization source identifier is used to identify a synchronization source. The identifier is randomly selected, but it has to be ensured that any two SSRCs in a same RTP session are different. In addition, a synchronization source identifier of a transmitter is the same as a synchronization source identifier in a corresponding RTP packet.

First, a hardware structure of the electronic device 100 is described.

FIG. 6 is a schematic diagram of a structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in this embodiment of this application.

The electronic device 100 may include a processor 110, an external memory interface 121, an internal memory 120, a universal serial bus (universal serial bus, USB) interface 130, a charging management module 140, a power management module 141, a battery 142, an antenna 1, an antenna 2, a mobile communications module 150, a wireless communications module 160, an audio module 170, a loudspeaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor may directly invoke the instructions or the data from the memory. This avoids repeated access, reduces a time for waiting of the processor 110, and improves system efficiency.

A wireless communications function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communications module 150 may provide a wireless communications solution including 2G/3G/4G/5G that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing, for example, filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least a part of functional modules of the mobile communications module 150 may be disposed in the processor 110. In some embodiments, at least a part of functional modules of the mobile communications module 150 and at least a part of modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal that is then transferred to the application processor. The application processor outputs a sound signal through an audio device (that is not limited to the loudspeaker 170A, the receiver 170B, and the like), or displays an image or a video by using the display screen 194. In some embodiments, the modem processor may be an independent component. In some other embodiments, the modem processor may be independent of the processor 110, and is disposed with the mobile communications module 150 or another functional module in the same device.

The wireless communications module 160 may provide a wireless communications solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processor module. The wireless communications module 160 receives an electromagnetic wave through the antenna 2, performs frequency modulation and filtering on an electromagnetic wave signal, and sends a processed signal to the processor 110. The wireless communications module 160 may further receive a signal, that is to be transmitted, from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, IR, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The wireless communications module 160 may be configured to establish a communication connection (for example, a Wi-Fi direct communication connection or a Bluetooth communication connection) to the large-screen device 200, and encode content displayed in a user interface on the electronic device 100 and send the content to the large-screen device 200 through the communication connection. That is, the wireless communications module 160 may support content sharing between the electronic device 100 and the large-screen device 200 through projection screen collaboration (for example, according to Miracast).

The electronic device 100 may implement a display function by using the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute a program instruction to generate or change display information.

The display screen 194 is configured to display an image, a video, or the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a Mini-LED, a Micro-LED, a Micro-OLED, a quantum dot light-emitting diode (quantum dot light-emitting diode, QLED), and the like. In some embodiments, the electronic device 100 may include one or N display screens 194, and N is a positive integer greater than 1.

In this embodiment of this application, the display screen 194 is configured to display the user interface implemented on the electronic device 100 mentioned in this embodiment of this application. For a specific implementation of the user interface, refer to related descriptions in a method embodiment below.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature in a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor that quickly processes input information by referring to a structure of a biological neural network, for example, by referring to a mode of transmission between human brain neurons, and may further continuously perform self-learning. Applications such as intelligent cognition of the electronic device 100, for example, image recognition, facial recognition, speech recognition, and text understanding, may be implemented by using the NPU.

The internal memory 120 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM, usually referred to as a DDRS SDRAM), and the like.

The non-volatile memory may include a magnetic disk storage device and a flash memory (flash memory).

The flash memory may be divided by operation principles into a NOR flash, a NAND flash, a 3D NAND flash, and the like. The flash memory may be divided by electric potential levels of storage units into a single-level cell (single-level cell, SLC), a multi-level cell (multi-level cell, MLC), a triple-level cell (triple-level cell, TLC), a quad-level cell (quad-level cell, QLC), and the like. The flash memory may be divided by storage specifications into a universal flash storage (English: universal flash storage, UFS), an embedded multimedia card (embedded multimedia card, eMMC), and the like.

The random access memory may be directly read and written by the processor 110, may be configured to store an operating system or an executable program (for example, a machine instruction) of another running program, and may be further configured to store data of a user and an application, and the like.

The non-volatile memory may also store an executable program, store data of a user and an application, and the like, and may be loaded to the random access memory in advance, for direct reading and writing of the processor 110.

The external memory interface 121 may be configured to connect to an external non-volatile memory, to extend a storage capability of the electronic device 100. The external non-volatile memory communicates with the processor 110 through the external memory interface 121, to implement a data storage function. For example, files such as music and a video are stored in the external non-volatile memory.

The electronic device 100 may implement an audio function, for example, music play or recording, by using the audio module 170, the loudspeaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or a part of functional modules of the audio module 170 are disposed in the processor 110.

The loudspeaker 170A, also referred to as a "speaker", is configured to convert an electrical audio signal into a sound signal. The electronic device 100 may receive music or receive a hands-free call by using the loudspeaker 170A.

The receiver 170B, also referred to as an "earpiece", is configured to convert an electrical audio signal into a sound signal. When a call or audio information is received by the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may move the mouth close to the microphone 170C and make a sound, to input a sound signal to the microphone 170C. At least one microphone 170C may be disposed in the electronic device 100. In some other embodiments, two microphones 170C may be disposed in the electronic device 100, to collect a sound signal and further reduce noises. In some other embodiments, three, four, or more microphones 170C may alternatively be disposed in the electronic device 100, to collect a sound signal, reduce noises, and identify a sound source, to implement a directional sound recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association, CTIA of the USA) standard interface.

The pressure sensor 180A is configured to sense a pressure signal, and may convert the pressure signal into an electrical signal. In some embodiments, the pressure sensor 180A may be disposed in the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a pressure is applied to the pressure sensor 180A, capacitance between electrodes changes. The electronic device 100 determines pressure intensity based on a capacitance change. When a touch operation is performed on the display screen 194, the electronic device 100 detects strength of the touch operation by using the pressure sensor 180A. The electronic device 100 may calculate a touch position based on a detection signal from the pressure sensor 180A. In some embodiments, touch operations that are performed at a same touch position but have different touch operation intensity may correspond to different operation instructions. For example, when a touch operation with touch operation intensity less than a first pressure threshold is performed on an icon of the application Messages, an instruction for viewing an SMS message is executed. When a touch operation with touch operation intensity greater than or equal to the first pressure threshold is performed on the icon Messages, an instruction for creating a new SMS message is executed.

The gyroscope sensor 180B may be configured to determine a motion posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 vibrates, calculates, based on the angle, a distance for which a lens module needs to compensate, and allows the lens to cancel the vibration of the electronic device 100 through reverse motion, to implement stabilization. The gyroscope sensor 180B may be further used in navigation or a motion-sensing game scenario.

The barometric pressure sensor 180C is configured to measure barometric pressure. In some embodiments, the electronic device 100 calculates an altitude based on a value of the barometric pressure measured by the barometric pressure sensor 180C, to help with positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature, for example, automatic unlocking, upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in, for example, switching between landscape mode and portrait mode or a pedometer.

The distance sensor 180F is configured to measure a distance. The electronic device 100 may measure a distance using infrared or laser. In some embodiments, in a photographing scenario, the electronic device 100 may measure a distance by using the distance sensor 180F, to implement quick focusing.

The optical proximity sensor 180G may include a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that a user is holding the electronic device 100 close to the ear when making a call, so as to automatically perform screen-off for power saving. The optical proximity sensor 180G may further be used in a leather case mode or a pocket mode to automatically unlock or lock the screen.

The ambient light sensor 180L is configured to sense ambient light brightness. The electronic device 100 may adaptively adjust luminance of the display screen 194 based on the sensed ambient light brightness. The ambient light sensor 180L may further be configured to automatically adjust a white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when a temperature reported by the temperature sensor 180J exceeds a threshold, the electronic device 100 lowers performance of a processor near the temperature sensor 180J, to reduce power consumption and provide thermal protection. In some other embodiments, when the temperature is less than another threshold, the electronic device 100 heats up the battery 142 to prevent the electronic device 100 from being shut down anomalously due to a low temperature. In some other embodiments, when the temperature is less than still another threshold, the electronic device 100 boosts an output voltage of the battery 142 to avoid anomalous shutdown due to a low temperature.

The touch sensor 180K may also be referred to as a "touchscreen device". The touch sensor 180K may be disposed on the display screen 194. The touch sensor 180K and the display screen 194 form a touchscreen, which is also referred to as a "touch screen". The touch sensor 180K is configured to detect a touch operation performed on or near the touch sensor. The touch sensor may transfer a detected touch operation to the application processor to determine a type of the touch event. A visual output related to the touch operation may be provided through the display screen 194. In some other embodiments, the touch sensor 180K may be alternatively disposed on a surface of the electronic device 100, and is located at a position different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may further be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be configured to produce an incoming call vibration prompt, and may be configured to provide touch vibration feedback. For example, touch operations performed for different applications (for example, taking a picture and playing audio) may correspond to different vibration feedback effects. For touch operations performed on different areas of the display screen 194, the motor 191 may also correspond to different vibration feedback effects. Different application scenarios (for example, time reminding, information receiving, an alarm clock, and a game) may also correspond to different vibration feedback effects. A touch vibration feedback effect may be further customized.

The indicator 192 may be an indicator light, may be configured to indicate a charging status and a power change, and may be configured to indicate a message, a missed call, a notification, and the like.

The SIM card interface 195 is used to connect a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 is compatible with different types of SIM cards. The SIM card interface 195 is also compatible with an external memory card. The electronic device 100 interacts with a network by using the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system on the electronic device 100 may use a layered architecture, an event-driven architecture, a micro kernel architecture, a micro service architecture, or a cloud architecture. In this embodiment of the present invention, an Android system with a layered architecture is used as an example to describe a software structure of the electronic device 100.

FIG. 7 is a block diagram of a software structure of the electronic device 100 according to an embodiment of the present invention.

In the layered architecture, software is divided into several layers, and each layer has a clear-cut role and task. The layers communicate with each other through a software interface. In some embodiments, the Android system is divided from top to bottom into four layers: an application layer, an application framework layer, Android runtime (Android runtime), and a system library, and a kernel layer.

The application layer may include a series of application packages.

As shown in FIG. 7, an application package may include applications such as Camera, Gallery, Calendar, Calls, Maps, Navigation, WLAN, Bluetooth, Music, Videos, and Messages.

The application framework layer provides an application programming interface (application programming interface, API) and a programming framework to an application at the application layer. The application framework layer includes some predefined functions.

As shown in FIG. 7, the application framework layer may include a window manager, a content provider, a view system, a phone manager, a resource manager, a notification manager, and the like.

The window manager is used to manage a window program. The window manager may obtain a size of a display screen, determine whether there is a status bar, lock the screen, take a screenshot, and the like.

The content provider is used to store and obtain data, and enable the data to be accessed by an application program. The data may include a video, an image, audio, outgoing and incoming calls, a browsing history and bookmarks, contacts, and the like.

The view system includes a visual control, for example, a control for displaying text and a control for displaying an image. The view system may be used to construct an application. A display interface may include one or more views. For example, a display interface including a notification icon of Messages may include a text display view and a picture display view.

The phone manager is used to provide a communications function of the electronic device 100, for example, management of a call status (including answering, hanging up, and the like).

The resource manager provides, to an application, various resources, such as a localized character string, an icon, a picture, a layout file, and a video file.

The notification manager enables an application to display notification information in the status bar, and may be used to transmit a notification-type message. The displayed information may automatically disappear after a short pause without user interaction. For example, the notification manager is used to notify download completion, provide a message notification, and the like. The notification manager may alternatively be a notification that appears in a status bar atop the system in a form of a graph or a scroll bar text, for example, a notification of an application running on the background, or may be a notification that appears on the screen in a form of a dialog window. For example, text information is prompted in the status bar, a prompt tone is played, the electronic device vibrates, or the indicator light blinks.

Android runtime includes a core library and a virtual machine. Android runtime is responsible for scheduling and management of the Android system.

The core library includes two parts. One of the parts is a performance function that needs to be invoked in the Java language, and the other part is a core library of Android.

The application layer and the application framework layer run on the virtual machine. The virtual machine executes Java files at the application layer and the application framework layer as binary files. The virtual machine is configured to implement functions such as object life cycle management, stack management, thread management, safety and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL)

The surface manager is used to manage a display subsystem and provide fusion of 2D and 3D layers for a plurality of applications.

The media library supports play and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be emphasized that FIG. 7 shows merely an example. The software structure of the electronic device 100 provided in this embodiment of this application may alternatively be another software architecture, for example, a software architecture of iOS^{®}, Harmony^{®}, Windows^{®}, Linux, or another operating system.

For example, FIG. 8 shows a hardware structure of a large-screen device 200. As shown in FIG. 8, the large-screen device 200 may include a video codec 221, a processor 222, a memory 223, a wireless communications processing module 224, a power switch 225, a wired LAN communications processing module 226, a high definition multimedia interface (high definition multimedia interface, HDMI) communications processing module 227, a USB communications processing module 228, a display screen 229, and an audio module 230. The modules may be connected through a bus. Specifically:

The processor 222 may be configured to read and execute computer-readable instructions. In a specific implementation, the processor 222 may mainly include a controller, an arithmetic logic unit, and a register. The controller is mainly responsible for decoding instructions and sending a control signal for an operation corresponding to the instructions. The arithmetic logic unit is mainly responsible for performing a fixed-point or floating-point arithmetic operation, a shift operation, a logic operation, and the like, or may perform an address operation and address conversion. The register is mainly responsible for storing a quantity of register operations, intermediate operation results, and the like that are temporarily stored in an instruction execution process. In a specific implementation, a hardware architecture of the processor 222 may be an application-specific integrated circuit (ASIC) architecture, an MIPS architecture, an ARM architecture, an NP architecture, or the like.

The wireless communications processing module 224 may include a WLAN communications processing module 224A, and may further include a Bluetooth (BT) communications processing module 224B, an NFC processing module 224C, a cellular mobile communications processing module (not shown), and the like.

In some embodiments, the wireless communications processing module 224 may be configured to: establish a communication connection to the electronic device 100, and receive, through the communication connection, encoded data sent by the electronic device 100. For example, the WLAN communications processing module 224A may be configured to establish a Wi-Fi direct communication connection to the electronic device 100, the Bluetooth (BT) communications processing module 224B may be configured to establish a Bluetooth communication connection to the electronic device 100, and the NFC processing module 224C may be configured to establish an NFC connection to the electronic device 100. That is, the wireless communications processing module 224 may support content sharing between the electronic device 100 and the large-screen device 200 through projection screen collaboration.

In an implementation, the wireless communications processing module 224 may detect a signal transmitted by the electronic device 100, for example, a probe request or a scanning signal, to discover the electronic device 100 and establish a communication connection to the electronic device 100. In another implementation, the wireless communications processing module 224 may alternatively transmit a signal, for example, a probe request or a scanning signal, so that the large-screen device 200 may discover the electronic device 100 and establish a communication connection (for example, a Wi-Fi P2P connection) to the electronic device 100.

In some embodiments, when the electronic device 100 and the large-screen device 200 share content through projection screen collaboration, the wireless communications processing module 224 (for example, the WLAN communications processing module 224A) may further receive a scenario notified by the electronic device 100. The processor 222 may parse and learn about the scenario, adaptively select a playback policy corresponding to the scenario, and invoke, by using the playback policy, modules such as the display screen 229 and the audio module 230 to play content sent by the electronic device 100.

The video codec 221 is configured to compress or decompress a digital video. In this embodiment of this application, the video codec 221 may decompress projection content from the electronic device 100. The large-screen device 200 may support one or more types of video codecs, and may play videos in one or more encoding formats, for example, MPEG-1, MPEG-2, MPEG-3, and MPEG-4.

The processor 222 may be configured to parse a signal received by the wireless communications processing module 224, for example, a probe request broadcast by the large-screen device 200. The processor 222 may be configured to perform a corresponding processing operation, for example, generate a probe response, according to a parsing result. The processor 222 may be configured to drive, according to a decompression result of the video codec 221, the display screen 229 to display.

The memory 223 is coupled to the processor 222, and is configured to store various types of software programs and/or a plurality of groups of instructions. In a specific implementation, the memory 223 may include a high-speed random access memory, and may further include a non-volatile memory, for example, one or more magnetic disk storage devices, a flash memory device, or another non-volatile solid-state storage device. The memory 223 may store an operating system, for example, an embedded operating system uCOS, VxWorks, RTLinux, Harmony, or Android. The memory 223 may further store a communications program, and the communications program may be used for communication with the large-screen device 200, one or more servers, or an additional device.

The power switch 225 may be configured to control a power supply to supply power to the large-screen device 200.

The wired LAN communications processing module 226 may be configured to communicate with another device in a same LAN by using the wired LAN, and may further be configured to be connected to a WAN by using the wired LAN, to communicate with a device in the WAN.

The HDMI communications processing module 227 may be configured to communicate with another device through an HDMI interface (not shown).

The USB communications processing module 228 may be configured to communicate with another device through a USB interface (not shown).

In some embodiments, the large-screen device 200 may be connected to an external display screen 300 through a USB interface, and the large-screen device 200 may transmit a displayed projection image frame to the display screen 300.

The display screen 229 may be configured to display an image, a video, or the like. The display screen 229 may be an LCD, an OLED, an AMOLED, an FLED, a QLED, or another display screen. For content displayed on the display screen 229, refer to related descriptions in a method embodiment below.

The audio module 230 may be configured to output an audio signal through an audio output interface, so that the large-screen device 200 can support audio play. The audio module 230 may be further configured to receive audio data through an audio input interface. The audio module 230 includes but is not limited to a microphone, a loudspeaker, a receiver, and the like.

In some embodiments, the large-screen device 200 may further include a serial interface, for example, an RS-232 interface. The serial interface may be connected to another device, for example, a sound box or another audio speaker device, so that a display collaborates with the audio speaker device to play audio and a video.

It can be understood that the structure shown in FIG. 8 does not constitute any specific limitation on the large-screen device 200. In some other embodiments of this application, the large-screen device 200 may include more or fewer components than those shown in the figure, combine some components, split some components, or have different component arrangements. The components shown in the figure may be implemented by hardware, software, or a combination of software and hardware.

A software system on the large-screen device 200 may use a layered architecture, an event-driven architecture, a micro kernel architecture, a micro service architecture, a cloud architecture, or the like. For example, the software system on the large-screen device 200 includes but is not limited to iOS^{®}, Android^{®}, Harmony^{®}, Windows^{®}, Linux, or another operating system. Harmony^{®} is Huawei's HarmonyOS.

For example, FIG. 9 shows a hardware structure of a display device 300. As shown in FIG. 9, the display device 300 may include a video codec 321, a processor 322, a memory 323, a wireless communications processing module 324, a power switch 325, a wired LAN communications processing module 326, a high definition multimedia interface (high definition multimedia interface, HDMI) communications processing module 327, a USB communications processing module 328, and a display screen 329. The modules may be connected through a bus. Specifically:

The processor 322 may be configured to read and execute computer-readable instructions. In a specific implementation, the processor 322 may mainly include a controller, an arithmetic logic unit, and a register. The controller is mainly responsible for decoding instructions and sending a control signal for an operation corresponding to the instructions. The arithmetic logic unit is mainly responsible for performing a fixed-point or floating-point arithmetic operation, a shift operation, a logic operation, and the like, or may perform an address operation and address conversion. The register is mainly responsible for storing a quantity of register operations, intermediate operation results, and the like that are temporarily stored in an instruction execution process. In a specific implementation, a hardware architecture of the processor 322 may be an application-specific integrated circuit (ASIC) architecture, an MIPS architecture, an ARM architecture, an NP architecture, or the like.

The wireless communications processing module 324 may include a WLAN communications processing module 324A, and may further include a Bluetooth (BT) communications processing module 324B, an NFC processing module 324C, a cellular mobile communications processing module (not shown), and the like.

In some embodiments, the wireless communications processing module 324 may be configured to: establish a communication connection to the large-screen device 200, and receive, through the communication connection, encoded data sent by the large-screen device 200. For example, the WLAN communications processing module 324A may be configured to establish a Wi-Fi direct communication connection to the large-screen device 200, the Bluetooth (BT) communications processing module 324B may be configured to establish a Bluetooth communication connection to the large-screen device 200, and the NFC processing module 324C may be configured to establish an NFC connection to the large-screen device 200.

In an implementation, the wireless communications processing module 324 may detect a signal transmitted by the large-screen device 200, for example, a probe request or a scanning signal, to discover the large-screen device 200 and establish a communication connection to the large-screen device 200. In another implementation, the wireless communications processing module 324 may alternatively transmit a signal, for example, a probe request or a scanning signal, so that the display device 300 may discover the large-screen device 200 and establish a communication connection (for example, a Wi-Fi P2P connection) to the large-screen device 200.

The video codec 321 is configured to compress or decompress a digital video. In this embodiment of this application, the video codec 321 may decompress projection content from the large-screen device 200. The display device 300 may support one or more types of video codecs, and may play videos in one or more encoding formats, for example, MPEG-1, MPEG-2, MPEG-3, and MPEG-4.

The processor 322 may be configured to parse a signal received by the wireless communications processing module 324, for example, a probe request broadcast by the display device 300. The processor 322 may be configured to perform a corresponding processing operation, for example, generate a probe response, according to a parsing result. The processor 322 may be configured to drive, according to a decompression result of the video codec 321, the display screen 329 to display.

The memory 323 is coupled to the processor 322, and is configured to store various types of software programs and/or a plurality of groups of instructions. In a specific implementation, the memory 323 may include a high-speed random access memory, and may further include a non-volatile memory, for example, one or more magnetic disk storage devices, a flash memory device, or another non-volatile solid-state storage device. The memory 323 may store an operating system, for example, an embedded operating system uCOS, VxWorks, RTLinux, Harmony, or Android. The memory 323 may further store a communications program, and the communications program may be used for communication with the display device 300, one or more servers, or an additional device.

The power switch 325 may be configured to control a power supply to supply power to the display device 300.

The wired LAN communications processing module 326 may be configured to communicate with another device in a same LAN by using the wired LAN, and may further be configured to be connected to a WAN by using the wired LAN, to communicate with a device in the WAN.

The HDMI communications processing module 327 may be configured to communicate with another device through an HDMI interface (not shown).

The USB communications processing module 328 may be configured to communicate with another device through a USB interface (not shown).

The display screen 329 may be configured to display an image, a video, or the like. The display screen 329 may be an LCD, an OLED, an AMOLED, an FLED, a QLED, or another display screen. For content displayed on the display screen 329, refer to related descriptions in a method embodiment below.

In some embodiments, the display device 300 may further include a serial interface, for example, an RS-232 interface. The serial interface may be connected to another device, for example, a sound box or another audio speaker device, so that a display collaborates with the audio speaker device to play audio and a video.

It can be understood that the structure shown in FIG. 9 does not constitute any specific limitation on the display device 300. In some other embodiments of this application, the display device 300 may include more or fewer components than those shown in the figure, combine some components, split some components, or have different component arrangements. The components shown in the figure may be implemented by hardware, software, or a combination of software and hardware.

A software system on the display device 300 may use a layered architecture, an event-driven architecture, a micro kernel architecture, a micro service architecture, a cloud architecture, or the like. For example, the software system on the display device 300 includes but is not limited to iOS^{®}, Android^{®}, Harmony^{®}, Windows^{®}, Linux, or another operating system. Harmony^{®} is Huawei's HarmonyOS.

In conclusion, the embodiments described above are merely intended for describing the technical solutions of this application, not for limiting this application. Although this application is described in detail with reference to the foregoing embodiments, a person of ordinary skill in the art should understand that modifications can still be made to the technical solutions described in the foregoing embodiments or equivalent replacements can still be made to some technical features thereof, without departing from the scope of the technical solutions of embodiments of this application.

## Claims

1. A projection screen system, wherein the system comprises an electronic device, a large-screen device, and a display device, and the large-screen device is configured to:
establish a first projection screen connection to the electronic device; and establish a second projection screen connection to the display device;
the electronic device is configured to send a first display parameter to the large-screen device, wherein the first display parameter comprises a first encoding frame rate of the electronic device;
the display device is configured to send a second display parameter to the large-screen device, wherein the second display parameter comprises a first decoding frame rate and a first display frame rate of the display device; and
the large-screen device is further configured to:
receive the first display parameter sent by the electronic device;
receive the second display parameter sent by the display device;
obtain a display parameter 3 of the large-screen device, wherein the display parameter 3 comprises a second encoding frame rate, a second decoding frame rate, and a second display frame rate;
determine a target display parameter based on the first display parameter, the second display parameter, and the display parameter 3, wherein the target display parameter comprises a target encoding frame rate, and the target encoding frame rate is less than or equal to a smallest value in the first encoding frame rate, the first decoding frame rate, the first display frame rate, the second encoding frame rate, the second decoding frame rate, and the second display frame rate; and
encode first projection content based on the target encoding frame rate in the target display parameter, and project the first projection content to the display device.

2. The system according to claim 1, wherein before the large-screen device encodes the first projection content based on the target encoding frame rate in the target display parameter, and projects the first projection content to the display device, the large-screen device is further configured to:
send the target display parameter to the electronic device, wherein the target display parameter is used to indicate the electronic device to encode second projection content at the target encoding frame rate and send the second projection content to the large-screen device;
the electronic device is further configured to:
encode the second projection content at the target encoding frame rate, and send the second projection content to the large-screen device; and
the large-screen device is further configured to:
receive the second projection content sent by the electronic device, and display the second projection content.

3. The system according to claim 1, wherein the large-screen device is specifically configured to:
after the large-screen device establishes the first projection screen connection to the electronic device, establish the second projection screen connection to the display device; or
after the large-screen device establishes the second projection screen connection to the display device, establish the first projection screen connection to the electronic device.

4. The system according to claim 1, wherein before the large-screen device receives the first display parameter sent by the electronic device, the large-screen device is further configured to:
send a first request to the electronic device, wherein the first request is used to indicate the electronic device to send the first display parameter to the large-screen device;
the electronic device is further configured to:
receive the first request sent by the large-screen device; and
send the first display parameter to the large-screen device in response to the first request; and
the large-screen device is further configured to:
receive the first display parameter sent by the electronic device.

5. The system according to claim 4, wherein the large-screen device is specifically configured to:
send the first request to the electronic device when it is determined that the second encoding frame rate is greater than the first decoding frame rate, the second encoding frame rate is greater than the first display frame rate, or the second encoding frame rate is less than the second display frame rate.

6. The system according to any one of claims 1 to 5, wherein the first display parameter further comprises a first encoding type and/or first screen resolution;
the second display parameter further comprises a second encoding type and/or second screen resolution;
the target display parameter further comprises a target encoding type and/or target screen resolution; and
the target encoding type is an encoding type common to the first encoding type and the second encoding type, and the target screen resolution is screen resolution common to the first screen resolution and the second screen resolution.

7. A method for adjusting a display parameter for projection, wherein the method comprises:
establishing, by a large-screen device, a first projection screen connection to an electronic device; and establishing, by the large-screen device, a second projection screen connection to a display device;
receiving, by the large-screen device, a first display parameter sent by the electronic device, wherein the first display parameter comprises a first encoding frame rate of the electronic device;
receiving, by the large-screen device, a second display parameter sent by the display device, wherein the second display parameter comprises a first decoding frame rate and a first display frame rate of the display device;
obtaining, by the large-screen device, a third display parameter of the large-screen device, wherein the display parameter 3 comprises a second encoding frame rate, a second decoding frame rate, and a second display frame rate;
determining, by the large-screen device, a target display parameter based on the first display parameter, the second display parameter, and the display parameter 3, wherein the target display parameter comprises a target encoding frame rate, and the target encoding frame rate is less than or equal to a smallest value in the first encoding frame rate, the first decoding frame rate, the first display frame rate, the second encoding frame rate, the second decoding frame rate, and the second display frame rate; and
encoding, by the large-screen device, first projection content based on the target encoding frame rate in the target display parameter, and projecting the first projection content to the display device.

8. The method according to claim 7, wherein before the large-screen device encodes the first projection content based on the target encoding frame rate in the target display parameter, and projects the first projection content to the display device, the method further comprises:
sending, by the large-screen device, the target display parameter to the electronic device, wherein the target display parameter is used to indicate the electronic device to encode second projection content at the target encoding frame rate and send the second projection content to the large-screen device;
receiving, by the large-screen device, the second projection content sent by the electronic device; and
displaying, by the large-screen device, the second projection content.

9. The method according to claim 7, wherein the establishing, by a large-screen device, a first projection screen connection to an electronic device; and establishing, by the large-screen device, a second projection screen connection to a display device specifically comprises:
after the large-screen device establishes the first projection screen connection to the electronic device, establishing, by the large-screen device, the second projection screen connection to the display device; or
after the large-screen device establishes the second projection screen connection to the display device, establishing, by the large-screen device, the first projection screen connection to the electronic device.

10. The method according to claim 7, wherein before the large-screen device receives the first display parameter sent by the electronic device, the method further comprises:
sending, by the large-screen device, a first request to the electronic device, wherein the first request is used to indicate the electronic device to send the first display parameter to the large-screen device.

11. The method according to claim 10, wherein the sending, by the large-screen device, a first request to the electronic device specifically comprises:
sending, by the large-screen device, the first request to the electronic device when the large-screen device determines that the second encoding frame rate is greater than the first decoding frame rate, the second encoding frame rate is greater than the first display frame rate, or the second encoding frame rate is less than the second display frame rate.

12. The method according to any one of claims 7 to 11, wherein the first display parameter further comprises a first encoding type and/or first screen resolution;
the second display parameter further comprises a second encoding type and/or second screen resolution;
the third display parameter further comprises a third encoding class type and/or third screen resolution;
the target display parameter further comprises a target encoding type and/or target screen resolution; and
the target encoding type is an encoding type common to the first encoding type and the second encoding type, and the target screen resolution is screen resolution common to the first screen resolution and the second screen resolution.

13. An electronic device, comprising one or more processors and one or more memories, wherein the one or more memories, the one or more encoders are coupled to the one or more processors, the one or more memories are configured to store computer program code, the computer program code comprises computer instructions, and the one or more processors invoke the computer instructions to enable the electronic device to perform the method according to any one of claims 7 to 12.

14. A computer-readable storage medium, wherein the computer-readable storage medium stores computer-executable instructions, and when invoked by a computer, the computer-executable instructions are used for performing the method according to any one of claims 7 to 12.

15. A computer program product comprising instructions, wherein when the computer program product runs on a computer, the computer is enabled to perform the method according to any one of claims 7 to 12.
